(19) Europäisches Patentamt
European Patent Office
Office européen des brevets

(11) **EP 4 557 146 A1**

(12) **EUROPEAN PATENT APPLICATION**
published in accordance with Art. 153(4) EPC

(43) Date of publication:
**21.05.2025 Bulletin 2025/21**

(21) Application number: **22956717.7**

(22) Date of filing: **29.08.2022**

(51) International Patent Classification (IPC):
**G06F 21/62** (2013.01)   **G06F 21/60** (2013.01)
**G06N 20/00** (2019.01)

(52) Cooperative Patent Classification (CPC):
**G06F 21/60; G06F 21/62; G06N 20/00**

(86) International application number:
**PCT/CN2022/115466**

(87) International publication number:
**WO 2024/044881 (07.03.2024 Gazette 2024/10)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **Huawei Technologies Co., Ltd.
Shenzhen, Guangdong 518129 (CN)**

(72) Inventors:
- **WANG, Jian
  Shenzhen, Guangdong 518129 (CN)**
- **TENG, Wei
  Shenzhen, Guangdong 518129 (CN)**
- **LI, Rong
  Shenzhen, Guangdong 518129 (CN)**

(74) Representative: **Maiwald GmbH
Engineering
Elisenhof
Elisenstrasse 3
80335 München (DE)**

(54) **DATA PROCESSING METHOD, TRAINING METHOD AND RELATED APPARATUS**

(57) This application provides a data processing method, applied to a wireless communication system with an artificial intelligence (artificial intelligence, AI) processing capability. In the method, machine learning models with a same structure are deployed on different communication apparatuses, and the plurality of apparatuses jointly complete data processing, so that quality of obtained data is continuously improved, thereby reducing data processing pressure of each apparatus, and ensuring that an apparatus with a weak computing capability can also obtain data with quality needed by the apparatus.

FIG. 9A

EP 4 557 146 A1

**Description**

## TECHNICAL FIELD

This application relates to the field of artificial intelligence (Artificial Intelligence, AI) technologies, and in particular, to a data processing method, a training method, and a related apparatus.

## BACKGROUND

With advent of a big data era, a data scale increases rapidly. How to mine valuable information from large-scale data becomes an urgent issue to be resolved in most application scenarios. Currently, a machine learning model is usually used to process data, to mine the valuable information from the data.

Before the data is processed by using the machine learning model, the machine learning model usually needs to be trained by using a large amount of data, to obtain a highly precise machine learning model through training. However, during actual application, it is usually difficult to obtain high-quality data available to train the machine learning model. Especially in a wireless communication network, due to interference and noise, a complex processing process usually needs to be performed on obtained data, to obtain high-quality data. Therefore, how to obtain, with low complexity, high-quality data used for training the machine learning model is a current hot research direction.

In a related technology, a process of processing raw data to obtain high-quality data may be considered as a data noise reduction process. If noise reduction processing is performed on the raw data a plurality of times by using the machine learning model, high-quality data can be obtained. The entire process may be modeled by using a Markov chain. However, a training process of a machine learning model used for noise reduction is complex. Using the machine learning model for inference, that is, performing noise reduction processing on the data, typically requires many times of noise reduction processing to be performed, resulting in a complex data processing process. Consequently, a large quantity of computing resources are needed on devices to support the training and the inference of the model, and this is difficult for most devices with weak computing capabilities, however.

## SUMMARY

This application provides a data processing method, in which machine learning models with a same structure are deployed on different apparatuses, and the plurality of apparatuses jointly complete data processing, so that quality of obtained data is continuously improved, thereby reducing data processing pressure of each apparatus, and ensuring that an apparatus with a weak computing capability can also implement the data processing.

A first aspect of this application provides a data processing method. An example in which the data processing method is performed by a first apparatus is used. The first apparatus may be a terminal device or a network device, or some components (for example, a processor, a chip, or a chip system) in the terminal device or the network device. Alternatively, the first apparatus may be a logical module and/or software that can implement all or some functions of the terminal device. Specifically, the method includes: The first apparatus receives first data from a second apparatus, where the first data is data processed by using a first machine learning model. That is, after obtaining the first data through processing by using the first machine learning model, the second apparatus sends the first data to the first apparatus. Then, the first apparatus processes the first data by using a second machine learning model, to obtain second data. A structure of the first machine learning model is the same as a structure of the second machine learning model, and the first apparatus and the second apparatus are configured to jointly perform data processing.

In some cases, the first apparatus and the second apparatus may also be referred to as distributed apparatuses. Different distributed apparatuses implement joint data processing by exchanging data.

Simply, after processing data by using a machine learning model, the second apparatus sends processed data to the first apparatus. Then, the first apparatus continues to process the data based on a machine learning model with the same structure, so that the two apparatuses jointly perform data processing.

In this solution, machine learning models are deployed on different apparatuses, and the plurality of apparatuses jointly complete data processing, so that quality of obtained data is continuously improved, thereby reducing data processing pressure of each apparatus, and ensuring that an apparatus with a weak computing capability can also obtain data with quality needed by the apparatus.

In a possible implementation, the second machine learning model is a diffusion transformer, a data processing process performed by using the diffusion transformer may be modeled as a Markov chain, and the second machine learning model is used to perform noise reduction processing on the first data. The diffusion transformer may be implemented through a neural network, for example, a fully connected neural network, a convolutional neural network, or a residual neural network. A process of processing data by using the diffusion transformer refers to continuously processing, by using the diffusion transformer, data output by the diffusion transformer through previous data processing, so that the data is gradually processed in a plurality of steps based on the same diffusion transformer, and high-quality output data is finally obtained.

In this solution, based on a feature of the diffusion transformer, the diffusion transformers with the same structure are deployed on different apparatuses, and different apparatuses implement the joint data processing in serial. This reduces data processing pressure of each apparatus on a basis that high-quality data can be obtained.

In a possible implementation, the method further includes: The first apparatus receives first information from the second apparatus, where the first information is for requesting the first apparatus to process the first data. For example, when the second apparatus needs to obtain high-quality data, and the second apparatus cannot autonomously complete an entire process of processing data, the second apparatus performs partial processing on raw data by using the first machine learning model, to obtain the first data; and the second apparatus sends the first data and the first information to the first apparatus, to request the first apparatus to assist the second apparatus in continuing to complete the data processing.

In this solution, request information is exchanged between the apparatuses, so that an apparatus with a weak data processing capability can request assistance from another apparatus to complete the data processing, so that data processing capabilities of the apparatuses are fully used, and it is ensured that the apparatus with the weak data processing capability can also obtain data with quality needed by the apparatus.

In a possible implementation, the first information sent by the second apparatus to the first apparatus indicates that a quantity of times that the first data is to be processed is a first quantity of times. The first apparatus processes the first data the first quantity of times by using the second machine learning model, to obtain the second data. A capability of the first apparatus supports completion of the processing performed on the first data the first quantity of times.

In a possible implementation, because the second apparatus requests the first apparatus to assist in completing the data processing, after the first apparatus obtains the second data through processing, the first apparatus sends the second data to the second apparatus, to feed back, to the second apparatus, the second data obtained through processing.

Alternatively, when the second apparatus is not a 1st apparatus for requesting assistance in the data processing, the first information further indicates information of a source apparatus. The source apparatus is the 1st apparatus for requesting the assistance in the data processing, the second apparatus is one of apparatuses for assisting in the data processing, and the first apparatus is another apparatus for assisting in the data processing. In this way, after obtaining the second data through processing, the first apparatus sends the second data to the source apparatus, to ensure that the source apparatus can obtain finally processed data.

In a possible implementation, the first information sent by the second apparatus to the first apparatus indicates that a quantity of times that the first data is to be processed is a first quantity of times. The first apparatus processes the first data a second quantity of times by using the second machine learning model, to obtain the second data, where the first quantity of times is greater than the second quantity of times, and a capability of the first apparatus does not support completion of the processing performed on the first data the first quantity of times. In addition, the first apparatus sends the second data and second information to a third apparatus. The second information indicates that a quantity of times that the second data is to be processed is a third quantity of times, the third quantity of times is a difference between the first quantity of times and the second quantity of times, and the third apparatus is configured to assist the first apparatus in processing data.

Simply, it is assumed that the second apparatus requests the first apparatus to assist in processing the first data 1000 times, but the capability of the first apparatus can support the first apparatus in completing the processing on the first data only 600 times. In this case, the first apparatus completes the processing on the first data 600 times, to obtain the second data. In addition, the first apparatus sends the second information to the third apparatus, to request the third apparatus to continue to process the second data 400 times.

In this solution, in a process of jointly performing data processing, a plurality of apparatuses separately complete partial processing on the data based on capabilities of the apparatuses, and send, to a next apparatus, data that is not processed completely, so that the next apparatus continues to complete the data processing. In this way, when the data processing capabilities of the apparatuses are considered, the plurality of apparatuses are coordinated to jointly complete the data processing, so that the data processing capabilities of the apparatuses are fully used, and it is ensured that an apparatus with a weak computing capability can also obtain data with quality needed by the apparatus.

In a possible implementation, the method further includes: The first apparatus sends assistance request information to the second apparatus, where the assistance request information is for requesting the second apparatus to assist in processing data.

In other words, the first apparatus may actively request the second apparatus to assist in processing the data, and the second apparatus first processes the data, and then sends processed data to the first apparatus for further processing. This avoids two times of data exchange between the first apparatus and the second apparatus.

In a possible implementation, the method further includes: The first apparatus sends third information to a central apparatus, where the third information indicates a quantity of processing times of data needed by the first apparatus. The first apparatus receives feedback information from the central apparatus, where the feedback information indicates that the second apparatus is an assisting node. In other words, the first apparatus may first feed back, to the central apparatus, the quantity of processing times of the data needed by the first apparatus, and the central apparatus coordinates the plurality of apparatuses, that is, the central apparatus indicates the second apparatus to assist the first apparatus in processing the data.

The second apparatus may alternatively feed back, to the central apparatus, a quantity of processing times of data needed by the second apparatus. In this case, the central apparatus may first determine that the second apparatus first processes data, and the first apparatus then continues to process data based on the data obtained by the second apparatus through processing, thereby effectively using the data obtained by the second apparatus through processing, and improving data processing efficiency of the first apparatus.

In this solution, the central apparatus is configured to coordinate the distributed apparatuses to jointly perform data processing, so that data processing tasks of the distributed apparatuses can be determined based on the requirements of the distributed apparatuses, thereby improving efficiency of jointly performing data processing by the distributed apparatuses.

In a possible implementation, the method further includes: The first apparatus receives fourth information from the central apparatus, where the fourth information indicates a quantity of times that the first apparatus needs to process data received from the second apparatus. The first apparatus processes the first data based on the fourth information by using the second machine learning model, to obtain the second data needed by the first apparatus.

In other words, in a process in which the central apparatus coordinates the distributed apparatuses to jointly perform data processing, the central apparatus may determine a data processing sequence of the distributed apparatuses and quantities of data processing times based on the data processing requirements of the distributed apparatuses, so that the distributed apparatuses can determine the quantities of data processing times after the distributed apparatuses receive data sent by another distributed apparatus.

In a possible implementation, the fourth information further indicates information about a third apparatus, and the third apparatus is an apparatus that is to receive data processed by first apparatus. The first apparatus sends the second data to the third apparatus based on the fourth information. In other words, after obtaining the second data through processing with the assistance of the second apparatus, the first apparatus may send the second data to the third apparatus, so that the third apparatus uses the second data or continues to process the second data.

Simply, the central apparatus may indicate, in information fed back to the distributed apparatus, a specific distributed apparatus from which the distributed apparatus needs to receive data, a quantity of processing times of the received data, and a specific distributed apparatus to which processed data needs to be sent, to effectively coordinate the distributed apparatuses to jointly perform data processing.

In a possible implementation, the method further includes: The first apparatus receives fifth information from the second apparatus, where the fifth information indicates a quantity of processed times corresponding to the first data. The first apparatus processes, by using the second machine learning model, the first data based on the quantity of processed times corresponding to the first data and the quantity of processing times of the data needed by the first apparatus, to obtain the second data needed by the first apparatus.

In this solution, in a process in which a previous distributed apparatus sends processed data to a next distributed apparatus, the previous distributed apparatus indicates a quantity of times that the previous distributed apparatus has processed data, so that the next distributed apparatus can determine, based on the quantity of times that the data has been processed, a quantity of times that the data still needs to be processed, thereby ensuring joint data processing, and the central apparatus does not need to specify a quantity of data processing times, thereby helping each distributed apparatus dynamically adjust the quantity of data processing times based on an actual running status.

A second aspect of this application provides a data processing method. An example in which the data processing method is performed by a first apparatus is used. The first apparatus may be a terminal device or a network device, or some components (for example, a processor, a chip, or a chip system) in the terminal device or the network device. Alternatively, the first apparatus may be a logical module and/or software that can implement all or some functions of the terminal device.

Specifically, the method includes: First, the first apparatus processes raw data by using a first machine learning model, to obtain first data. Then, the first apparatus sends the first data to a second apparatus. Finally, the first apparatus receives second data sent by the second apparatus or another apparatus, where the second data is obtained through processing based on a second machine learning model, and a structure of the first machine learning model is the same as a structure of the second machine learning model.

Optionally, the first apparatus and the second apparatus may interact with each other in advance, so that after receiving the data sent by the first apparatus, the second apparatus may determine that the data sent by the first apparatus needs to be processed for a specific quantity of times.

In other words, the first apparatus first determines a quantity of times that the raw data needs to be processed, and processes the raw data the specific quantity of times, to obtain the first data. Because the quantity of times that the first apparatus processes the raw data is less than the quantity of times that the raw data needs to be processed, the first apparatus sends the first data to the second apparatus, to request, by default, the second apparatus to assist in processing the first data.

In this solution, machine learning models are deployed on different apparatuses, and devices on the plurality of apparatuses jointly complete data processing, so that quality of obtained data is continuously improved, thereby reducing data processing pressure of each apparatus, and ensuring that an apparatus with a weak computing capability can also obtain data with quality needed by the apparatus.

In a possible implementation, the first machine learning model is a diffusion transformer, a data processing process performed by using the diffusion transformer may be modeled as a Markov chain, and the first machine learning model is used to perform noise reduction processing on the raw data.

In a possible implementation, the first apparatus may further send first information to the second apparatus, where the first information is for requesting the second apparatus to process the first data, and/or the first information indicates a quantity of times that the first data is to be processed, and the quantity of times that the first data is to be processed is determined based on a quantity of times that the raw data needs to be processed and a quantity of times that the first apparatus processes the raw data.

In other words, in addition to sending the to-be-processed first data to the second apparatus, the first apparatus further sends the first information to the second apparatus, to indicate the second apparatus how to process the first data.

A third aspect of this application provides a data processing method. An example in which the data processing method is performed by a central apparatus is used. The central apparatus may be a terminal device or a network device, or some components (for example, a processor, a chip, or a chip system) in the terminal device or the network device. Alternatively, the central apparatus may be a logical module and/or software that can implement all or some functions of the terminal device.

Specifically, the method includes: The central apparatus receives first information from a first apparatus and second information from a second apparatus, where the first information indicates a first quantity of processing times of data needed by the first apparatus, the second information indicates a second quantity of processing times of data needed by the second apparatus, and a data processing model corresponding to the first quantity of processing times is the same as a data processing model corresponding to the second quantity of processing times. The central apparatus sends third information to the second apparatus, where the third information indicates the second apparatus to send processed data to the first apparatus. The second quantity of processing times of the data needed by the second apparatus is less than or equal to the first quantity of processing times of the data needed by the first apparatus.

Simply, the first apparatus and the second apparatus may also be referred to as distributed apparatuses, and both the first apparatus and the second apparatus feed back the quantities of processing times of the needed data to the central apparatus. The central apparatus determines, based on the quantities of processing times of the data needed by the first apparatus and the second apparatus, a data processing sequence of the first apparatus and the second apparatus in a process of jointly processing the data, to indicate the second apparatus to send the processed data to the first apparatus. That is, the second apparatus first processes the data, and then sends the processed data to the first apparatus.

In this solution, the central apparatus is configured to coordinate the distributed apparatuses to jointly perform data processing, so that data processing tasks of the distributed apparatuses can be determined based on the requirements of the distributed apparatuses, thereby improving efficiency of jointly performing data processing by the distributed apparatuses.

In a possible implementation, the method further includes: The central apparatus sends fourth information to the first apparatus, where the fourth information indicates a quantity of times that the first apparatus needs to process data received from the second apparatus.

For example, assuming that the quantity of processing times of the data needed by the first apparatus is 1000, and the quantity of processing times of data needed by the second apparatus is 600, the fourth information sent by the central apparatus to the first apparatus may indicate that a quantity of times that the data received by the first apparatus from the second apparatus needs to be processed is 400.

A fourth aspect of this application provides a model training method. The method is applied to a first apparatus in a training system. The first apparatus may be a terminal device or a network device, or some components (for example, a processor, a chip, or a chip system) in the terminal device or the network device. Alternatively, the first apparatus may be a logical module and/or software that can implement all or some functions of the terminal device. The training system includes a plurality of distributed apparatuses. Specifically, the method includes: First, the first apparatus obtains a training sample set, where the training sample set includes first data and second data, the first data is obtained based on the second data, and the second data is a training label of the first data. Then, the first apparatus trains a first machine learning model based on the training sample set, to obtain a trained first machine learning model. In a training process, the first data is used as input data of the first machine learning model, the first machine learning model processes the first data, calculates a loss function based on the processed data and the second data, and updates a parameter in the first machine learning model based on the loss function, to train the first machine learning model. After the training ends, the first apparatus sends the trained first machine learning model to a second apparatus, where the second apparatus is an apparatus configured to aggregate machine learning models that are obtained by a plurality of apparatuses through training and that have a same structure and different parameters. The second apparatus may also be referred to as an aggregation apparatus.

In this solution, same machine learning models are deployed on different distributed apparatuses, and the same machine learning models are trained. Finally, the aggregation apparatus aggregates trained machine learning models on the distributed apparatuses, so that a training process can be split into different distributed apparatuses for execution, thereby reducing model training pressure of the distributed apparatuses.

In a possible implementation, the method further includes: The first apparatus sends first information to a third apparatus, where the first information indicates a capability that is related to model training and that is on the first apparatus. The third apparatus is configured to determine, based on capabilities of a plurality of apparatuses participating in machine learning model training, training content for which the plurality of apparatuses are responsible. Therefore, the third apparatus may also be referred to as a central apparatus. After sending the first information, the first apparatus receives second information from the third apparatus, where the second information indicates a quantity of times that the first machine learning model trained on the first apparatus processes the input data. The second information further indicates a requirement on the input data of the first machine learning model. For example, when the input data of the first machine learning model is obtained by performing noise addition processing on target data, the requirement on the input data of the first machine learning model may be a quantity of times of performing noise addition processing on the target data.

A process in which the first apparatus obtains the training sample set includes: The first apparatus processes target data based on the requirement on the input data and the quantity of times that the first machine learning model processes the input data that are indicated by the second information, to obtain the second data and the first data. For example, it is assumed that the requirement on the input data is to perform noise addition processing on the target data M-N to M times, to obtain a group of data, and obtain first data and second data from the group of data, where the second data is a training label of the first data, and a quantity of noise addition times needed for obtaining the second data is less than a quantity of noise addition times needed for obtaining the first data corresponding to the second data.

In a possible implementation, the method further includes: The first apparatus receives a second machine learning model from the second apparatus. The first apparatus trains the second machine learning model based on the training sample set, to obtain a trained second machine learning model. The first apparatus sends the trained second machine learning model to the second apparatus.

In other words, after the second apparatus aggregates the machine learning models on the plurality of distributed apparatuses, the second apparatus continues to send, to the first apparatus, the second machine learning model obtained through aggregation, so that the first apparatus continues to train the second machine learning model.

A fifth aspect of this application provides a model training method. The method is applied to a first apparatus. The first apparatus may be a terminal device or a network device, or some components (for example, a processor, a chip, or a chip system) in the terminal device or the network device. Alternatively, the first apparatus may be a logical module and/or software that can implement all or some functions of the terminal device. The method includes: The first apparatus receives a plurality of pieces of capability information, where the plurality of pieces of capability information are from a plurality of different apparatuses, and each of the plurality of pieces of capability information indicates a capability that is related to model training and that is on an apparatus. Then, the first apparatus separately sends different training configuration information to the plurality of different apparatuses based on the plurality of pieces of capability information, where the training configuration information indicates quantities of times that machine learning models trained on the apparatuses process input data, the training configuration information further indicates requirements on the input data of the machine learning models trained on the apparatuses, and the machine learning models trained on the plurality of different apparatuses are models with a same structure. The first apparatus may also be referred to as a central apparatus.

Simply, the process of continuously processing the data by using the machine learning model may be considered as a Markov chain, and performing one-time processing on the data by using the machine learning model may be considered as a link in the Markov chain. The central apparatus may split the Markov chain into a plurality of sub-chains, and configure, based on the capabilities of the distributed apparatuses, the sub-chains obtained through splitting into different distributed apparatuses. That is, the different distributed apparatuses are configured to execute different training task.

Optionally, the capability that is related to the model training and that is on the distributed apparatus may include capabilities such as a computing capability, a storage capability, and a communication capability of the distributed apparatus. The computing capability may be measured by using a quantity of times that the distributed apparatus can perform an operation per second. The storage capability may be measured by using a size of a storage space that is allocated to the model training and that is on the distributed apparatus. The communication capability may be measured by using a data transmission rate allocated to a model training process on the distributed apparatus. In addition to the foregoing plurality of capabilities, the capability that is related to the model training and that is on the distributed apparatus may further include another capability that can affect the model training. This is not specifically limited herein.

A sixth aspect of this application provides a communication apparatus. The communication apparatus includes: a transceiver module, configured to receive first data from a second apparatus, where the first data is data processed by using a first machine learning model; and a processing module, configured to process the first data by using a second machine learning model, to obtain second data, where a structure of the first machine learning model is the same as a structure of the second machine learning model, and the communication apparatus and the second apparatus are configured to jointly perform data processing.

In a possible implementation, the second machine learning model is a diffusion transformer, a data processing process performed by using the diffusion transformer may be modeled as a Markov chain, and the second machine learning model is used to perform noise reduction processing on the first data.

In a possible implementation, the transceiver module is further configured to receive first information from the second apparatus, where the first information is for requesting the communication apparatus to process the first data.

In a possible implementation, the first information indicates that a quantity of times that the first data is to be processed is a first quantity of times. The processing module is further configured to process the first data the first quantity of times by using the second machine learning model, to obtain the second data, where a capability of the first apparatus supports completion of the processing performed on the first data the first quantity of times.

In a possible implementation, the transceiver module is further configured to send the second data to the second apparatus. Alternatively, the transceiver module is configured to send the second data to a source apparatus, where the first information further indicates information about the source apparatus, and the source apparatus is a $1^{st}$ apparatus for requesting assistance in data processing.

In a possible implementation, the first information indicates that a quantity of times that the first data is to be processed is a first quantity of times. The processing module is further configured to process the first data a second quantity of times by using the second machine learning model, to obtain the second data, where the first quantity of times is greater than the second quantity of times, and a capability of the first apparatus does not support completion of the processing performed on the first data the first quantity of times. The transceiver module is further configured to send the second data and second information to a third apparatus. The second information indicates that a quantity of times that the second data is to be processed is a third quantity of times, the third quantity of times is a difference between the first quantity of times and the second quantity of times, and the third apparatus is configured to assist the communication apparatus in processing data.

In a possible implementation, the transceiver module is further configured to send assistance request information to the second apparatus, where the assistance request information is for requesting the second apparatus to assist in processing data.

In a possible implementation, the transceiver module is further configured to send third information to the central apparatus, where the third information indicates a quantity of processing times of data needed by the communication apparatus. The transceiver module is further configured to receive feedback information from the central apparatus, where the feedback information indicates that the second apparatus is an assisting node.

In a possible implementation, the transceiver module is further configured to receive fourth information from the central apparatus, where the fourth information indicates a quantity of times that the communication apparatus needs to process data received from the second apparatus. The processing module is further configured to process the first data based on the fourth information by using the second machine learning model, to obtain the second data needed by the communication apparatus.

In a possible implementation, the fourth information further indicates information about a third apparatus, and the third apparatus is an apparatus that is to receive data processed by first apparatus. The transceiver module is further configured to send the second data to the third apparatus based on the fourth information.

In a possible implementation, the transceiver module is further configured to receive fifth information from the second apparatus, where the fifth information indicates a quantity of processed times corresponding to the first data. The processing module is further configured to process, by using the second machine learning model, the first data based on the quantity of processing times and the quantity of processing times of the data needed by the communication apparatus, to obtain the second data needed by the communication apparatus.

In a possible implementation, the transceiver module is a transceiver, and the processing module is a processor.

A seventh aspect of this application provides a communication apparatus, including: a processing module, configured to process raw data by using a first machine learning model, to obtain first data; and a transceiver module, configured to send the first data to a second apparatus. The transceiver module is further configured to receive second data sent by the second apparatus or another apparatus, where the second data is obtained by processing the first data based on a second machine learning model, and a structure of the first machine learning model is the same as a structure of the second machine learning model.

In a possible implementation, the first machine learning model is a diffusion transformer, a data processing process performed by using the diffusion transformer may be modeled as a Markov chain, and the first machine learning model is used to perform noise reduction processing on the raw data.

In a possible implementation, the transceiver module is further configured to send first information to the second apparatus, where the first information is for requesting the second apparatus to process the first data, and/or the first information indicates a quantity of times that the first data is to be processed, and the quantity of times that the first data is to be processed is determined based on a quantity of times that the raw data needs to be processed and a quantity of times that the first apparatus processes the raw data.

In a possible implementation, the transceiver module is a transceiver, and the processing module is a processor.

An eighth aspect of this application provides a communication apparatus, including: a transceiver module, configured to receive first information from a first apparatus and second information from a second apparatus, where the first information indicates a first quantity of processing times of data needed by the first apparatus, the second information indicates a second quantity of processing times of data needed by the second apparatus, and a data processing model corresponding to the first quantity of processing times is the same as a data processing model corresponding to the second quantity of processing times. The transceiver module is further configured to send third information to the second apparatus, where the third information indicates the second apparatus to send processed data to the first apparatus, and the second quantity of processing times of the data needed by the second apparatus is less than or equal to the first quantity of processing times of the data needed by the first apparatus.

In a possible implementation, the transceiver module is further configured to send fourth information to the first apparatus, where the fourth information indicates a quantity of times that the first apparatus needs to process data received from the second apparatus.

In a possible implementation, the transceiver module is a transceiver.

A ninth aspect of this application provides a model training apparatus, including: a transceiver module, configured to obtain a training sample set, where the training sample set includes first data and second data, the first data is obtained based on the second data, and the second data is a training label of the first data; a processing module, configured to train a first machine learning model based on the training sample set, to obtain a trained first machine learning model, where the first machine learning model is used to process the first data; and a sending module, configured to send the trained first machine learning model to a second apparatus, where the second apparatus is an apparatus configured to aggregate machine learning models that are obtained by a plurality of apparatuses through training and that have a same structure and different parameters.

In a possible implementation, the sending module is further configured to send first information to a third apparatus, where the first information indicates a capability that is related to model training and that is on the model training apparatus, and the third apparatus is configured to determine, based on capabilities of the plurality of apparatuses participating in training the machine learning models, training content for which the plurality of apparatuses are responsible. The transceiver module is further configured to receive second information from the third apparatus, where the second information indicates a quantity of times that the first machine learning model trained on the model training apparatus processes input data, and the second information further indicates a requirement on the input data of the first machine learning model. The processing module is further configured to: process raw data based on the requirement on the input data and the quantity of times that the first machine learning model processes the input data that are indicated by the second information, to obtain the second data; and process the second data based on the quantity of times that the first machine learning model processes the input data and that is indicated by the second information, to obtain the first data.

In a possible implementation, the transceiver module is further configured to receive a second machine learning model from the second apparatus. The processing module is further configured to train the second machine learning model based on the training sample set, to obtain a trained second machine learning model. The sending module is further configured to send the trained second machine learning model to the second apparatus.

In a possible implementation, the transceiver module is a transceiver, and the processing module is a processor.

A tenth aspect of this application provides a model training apparatus, including: a transceiver module, configured to receive a plurality of pieces of capability information, where the plurality of pieces of capability information are from a plurality of different apparatuses, and each of the plurality of pieces of capability information indicates a capability that is related to model training and that is on an apparatus. The transceiver module is configured to separately send different training configuration information to a plurality of different apparatuses based on a plurality of pieces of capability information, where the training configuration information indicates a quantity of times that a machine learning model trained on the apparatus processes input data, the training configuration information further indicates a requirement on input data of the machine learning model trained on the apparatus, and the machine learning models trained by the plurality of different apparatuses are models with a same structure.

In a possible implementation, the transceiver module is a transceiver.

An eleventh aspect of embodiments of this application provides a communication apparatus, including at least one processor. The at least one processor is coupled to a memory. The memory is configured to store a program or instructions. The at least one processor is configured to execute the program or the instructions, to enable the apparatus to implement the method according to any one of the first aspect or the possible implementations of the first aspect, to enable the apparatus to implement the method according to any one of the second aspect or the possible implementations of the second aspect, to enable the apparatus to implement the method according to any one of the third aspect or the possible implementations of the third aspect, to enable the apparatus to implement the method according to any one of the fourth aspect or the possible implementations of the fourth aspect, or to enable the apparatus to implement the method according to any one of the fifth aspect or the possible implementations of the fifth aspect.

In a possible implementation, the communication apparatus further includes the memory. Optionally, the memory and the processor are integrated together; or the memory and the processor are disposed separately.

In a possible implementation, the communication apparatus further includes a transceiver, configured to: receive and send data or signaling.

A twelfth aspect of embodiments of this application provides a computer-readable storage medium storing one or more computer-executable instructions. When the computer-executable instruction is executed by a processor, the processor performs the method according to any one of the first aspect or the possible implementations of the first aspect, the processor performs the method according to any one of the second aspect or the possible implementations of the second aspect, the processor performs the method according to any one of the third aspect or the possible implementations of the third aspect, the processor performs the method according to any one of the fourth aspect or the possible implementations of the fourth aspect, or the processor performs the method according to any one of the fifth aspect or the possible implementations of the fifth aspect.

A thirteenth aspect of embodiments of this application provides a computer program product (or referred to as a computer program) storing one or more computers. When the computer program product is executed by a processor, the processor performs the method according to any one of the first aspect or the possible implementations of the first aspect, the processor performs the method according to any one of the second aspect or the possible implementations of the second aspect, the processor performs the method according to any one of the third aspect or the possible implementations of the third aspect, the processor performs the method according to any one of the fourth aspect or the possible implementations of the fourth aspect, or the processor performs the method according to any one of the fifth aspect or the possible implementations of the fifth aspect.

A fourteenth aspect of embodiments of this application provides a chip system. The chip system includes at least one processor, configured to support a communication apparatus in implementing a function in any one of the first aspect or the possible implementations of the first aspect, configured to support a communication apparatus in implementing a function in any one of the second aspect or the possible implementations of the second aspect, configured to support a communication apparatus in implementing a function in any one of the third aspect or the possible implementations of the third aspect, configured to support a communication apparatus in implementing a function in any one of the fourth aspect or the possible implementations of the fourth aspect, or configured to support a communication apparatus in implementing the method in any one of the fifth aspect or the possible implementations of the fifth aspect.

In a possible design, the chip system may further include a memory, configured to store program instructions and data that are necessary for the communication apparatus. The chip system may include a chip, or may include the chip and another discrete device. Optionally, the chip system further includes an interface circuit, and the interface circuit provides program instructions and/or data for the at least one processor.

A fifteenth aspect of embodiments of this application provides a communication system. The communication system includes the communication apparatuses in the sixth aspect and the seventh aspect, the communication system includes the communication apparatuses in the sixth aspect, the seventh aspect, and the eighth aspect, and/or the communication system includes the communication apparatuses in the ninth aspect and the tenth aspect.

For technical effects achieved by any design manner of the sixth aspect to the fifteenth aspect, refer to technical effects achieved by different implementations of the first aspect to the fifth aspect. Details are not described herein again.

## BRIEF DESCRIPTION OF DRAWINGS

FIG. 1 is a diagram of a process of processing data by using a diffusion transformer according to an embodiment of this application;

FIG. 2 is a diagram of a partial structure of a fully connected neural network according to an embodiment of this application;

FIG. 3 is a diagram of a process of training a neural network according to an embodiment of this application;

FIG. 4 is a diagram of a process in which a neural network performs backpropagation according to an embodiment of this application;

FIG. 5 is a diagram of an architecture of a wireless communication system according to an embodiment of this application;

FIG. 6 is a diagram of an architecture of a smart home communication system according to an embodiment of this application;

FIG. 7 is a schematic flowchart of a model training method according to an embodiment of this application;

FIG. 8 is another schematic flowchart of a model training method according to an embodiment of this application;

FIG. 9A is a schematic flowchart of a data processing method 900 according to an embodiment of this application;

FIG. 9B is another schematic flowchart of a data processing method 900 according to an embodiment of this application;

FIG. 10A is a schematic flowchart of a data processing method 1000 according to an embodiment of this application;

FIG. 10B is another schematic flowchart of a data processing method 1000 according to an embodiment of this application;

FIG. 11 is a schematic flowchart of a data processing method 1100 according to an embodiment of this application;

FIG. 12 is a schematic flowchart of a data processing method 1200 according to an embodiment of this application;

FIG. 13 is a diagram of a structure of a communication apparatus 1300 according to an embodiment of this application;

FIG. 14 is a diagram of a structure of a model training apparatus 1400 according to an embodiment of this application;

FIG. 15 is a diagram of a structure of a communication apparatus 1500 according to an embodiment of this application;

FIG. 16 is a diagram of a structure of a communication apparatus 1600 according to an embodiment of this application; and

FIG. 17 is a diagram of a structure of a communication apparatus 1700 according to an embodiment of this application.

## DESCRIPTION OF EMBODIMENTS

The following describes embodiments of this application with reference to the accompanying drawings. It is clear that the described embodiments are merely some rather than all of embodiments of this application. A person of ordinary skill in the art may learn that, with development of technologies and emergence of a new scenario, technical solutions provided in embodiments of this application are also applicable to a similar technical problem.

In the specification, claims, and accompanying drawings of this application, terms "first", "second", and the like are intended to distinguish between similar objects (for example, to distinguish between objects in a same embodiment), but do not necessarily indicate a specific sequence or order, and objects (for example, "first information", a "first apparatus", "second information", and a "second apparatus") defined by "first" and "second" in different embodiments may be different objects. For example, the "first apparatus" in Embodiment 1 may be a distributed node, and the "first apparatus" in Embodiment 2 may be a central node. It should be understood that, data termed in such a way is interchangeable in appropriate circumstances, so that embodiments described herein can be implemented in a sequence other than the sequence illustrated or described herein.

In addition, terms "include", "have" and any other variants thereof are intended to cover non-exclusive inclusion. For example, a process, method, system, product, or device that includes a list of steps or modules is not necessarily limited to those steps or modules that are expressly listed, but may include other steps or modules that are not expressly listed or inherent to such a process, method, product, or device. Names or numbers of steps in this application do not mean that the steps in a method procedure need to be performed in a time/logical sequence indicated by the names or numbers. An execution sequence of the steps in the procedure that have been named or numbered can be changed based on a technical objective to be achieved, provided that same or similar technical effects can be achieved.

For ease of understanding, the following first describes technical terms in embodiments of this application.

(1) Terminal device

The terminal device is a wireless terminal device that can receive scheduling information and indication information that are sent by a network device. The wireless terminal device may be a device that provides voice and/or data connectivity for a user, a handheld device with a wireless connection function, or another processing device connected to a wireless modem.

The terminal device may communicate with one or more core networks or an internet through a radio access network (wireless access network, RAN). For example, the terminal device may be a mobile terminal device, for example, a cellphone (or referred to as a "cellular" phone or a mobile phone (mobile phone)), a computer, or a data card. For example, the terminal device may be a portable, pocket-sized, handheld, computer built-in, or vehicle-mounted mobile apparatus, which exchanges voice and/or data with the radio access network. For another example, the terminal device may alternatively be a device such as a personal communication service (personal communication service, PCS) phone, a cordless phone, a session initiation protocol (Session initialization Protocol, SIP) phone, a wireless local loop (wireless local loop, WLL) station, a personal digital assistant (personal digital assistant, PDA), a tablet personal computer (Tablet Personal Computer, Tablet PC), or a computer with a wireless transceiver function. Usually, the terminal device may alternatively be referred to as a system, a subscriber unit (subscriber unit), a subscriber station (subscriber station), a mobile station (mobile station, MS), a remote station (remote station), an access point (access point, AP), a remote terminal (remote terminal) device, an access terminal (access terminal) device, a user terminal (user terminal) device, a user agent (user agent), a subscriber station (subscriber station, SS), customer premises equipment (customer premises equipment, CPE), a terminal (terminal), user equipment (user equipment, UE), a mobile terminal (mobile terminal, MT), or the like.

By way of example, and not limitation, in embodiments of this application, the terminal device may alternatively be a wearable device. The wearable device may also be referred to as a wearable intelligent device, an intelligent wearable device, or the like, and is a general term of wearable devices that are intelligently designed and developed for daily wear by using a wearable technology, for example, glasses, gloves, watches, clothes, and shoes. The wearable device is a portable device that can be directly worn on a body or integrated into clothes or an accessory of the user. The wearable device is not only a hardware device, but also implements a powerful function through software support, data exchange, and cloud interaction. In a broad sense, wearable intelligent devices include full-featured and large-sized devices that can implement all or some of functions without depending on smartphones, for example, smart watches or smart glasses, and include devices that dedicated to only one type of application function and need to collaboratively work with other devices such as smartphones, for example, various smart bands, smart helmets, or smart jewelry for monitoring physical signs.

The terminal may alternatively be an uncrewed aerial vehicle, a robot, a terminal in device-to-device (device-to-device, D2D) communication, a terminal in vehicle-to-everything (vehicle to everything, V2X), a virtual reality (virtual reality, VR) terminal device, an augmented reality (augmented reality, AR) terminal device, a wireless terminal in industrial control (industrial control), a wireless terminal in self driving (self driving), a wireless terminal in telemedicine (remote medical), a wireless terminal in a smart grid (smart grid), a wireless terminal in transportation safety (transportation safety), a wireless terminal in a smart city (smart city), a wireless terminal in a smart home (smart home), or the like.

In addition, the terminal device may alternatively be a terminal device in a 5th generation (5th generation, 5G) communication system, a terminal device in a further evolved communication system (for example, a 6th generation (6th generation, 6G) communication system), a terminal device in a future evolved public land mobile network (public land mobile network, PLMN), or the like. For example, a 6G network may further extend a form and a function of a 5G communication terminal, and a 6G terminal includes but is not limited to a vehicle, a cellular network terminal (integrating a function of a satellite terminal), an uncrewed aerial vehicle, and an internet of things (internet of things, IoT) device.

In embodiments of this application, the terminal device may have an AI processing capability, and can process data by using an AI model.

(2) Network device

The network device may be a device that provides a wireless access service in a wireless network. For example, the network device may be a RAN node (or a RAN device) that connects the terminal device to the wireless network, and may also be referred to as a base station. Currently, some examples of the RAN device are: a next generation NodeB (next Generation NodeB, gNB) in the 5G communication system, a transmission reception point (transmission reception point, TRP), an evolved NodeB (evolved NodeB, eNB), a radio network controller (radio network controller, RNC), a NodeB (NodeB, NB), a home base station (for example, a home evolved NodeB, or a home NodeB, HNB), a baseband unit (baseband unit, BBU), a wireless fidelity (wireless fidelity, Wi-Fi) access point (Access Point, AP), or the like. In addition, in a network structure, the network device may include a central unit (centralized unit, CU) node, a distributed unit (distributed unit, DU) node, or a RAN device including the CU node and the DU node.

The network device may be another apparatus that provides a wireless communication function for the terminal device. A specific technology and a specific device form that are used by the network device are not limited in embodiments of this application. For ease of description, this is not limited in embodiments of this application.

The network device may further include a core network device. For example, the core network device includes network elements such as a mobility management entity (mobility management entity, MME), a home subscriber server (home subscriber server, HSS), a serving gateway (serving gateway, S-GW), a policy and charging rules function (policy and charging rules function, PCRF), and a public data network gateway (public data network gateway, PDN gateway, P-GW) in a 4th generation (4th generation, 4G) network, and an access and mobility management function (access and mobility management function, AMF), a user plane function (user plane function, UPF), and a session management function (session management function, SMF) in a 5G network. In addition, the core network device may further include a 5G network and another core network device in a next-generation or future network of the 5G network.

In embodiments of this application, the network device may further be a network node having an AI capability, and may provide an AI service for a terminal or another network device, for example, may be an AI node, a computing node, a RAN node having an AI capability, or a core network element having an AI capability on a network side (an access network or a core network).

In embodiments of this application, an apparatus configured to implement a function of a network device may be a network device, or may be an apparatus, for example, a chip system, that can support the network device in implementing the function. The apparatus may be installed in the network device.

(3) Markov chain (Markov Chain, MC)

The Markov chain refers to a stochastic process (stochastic process) that has a Markov property (Markov property) and that exists in a discrete index set (index set) and state space (state space) in a probability theory and mathematical statistics.

Simply, the Markov chain is a set of discrete random variables with the Markov property, and specifically, is a one-dimensional countable set used as the index set in the random variable set $X$ in a probability space $(\Omega, F, P)$, where the probability space $(\Omega, F, P)$ is a measure space whose total measure is 1; $\Omega$ is a non-empty set, also referred to as a sample space; $F$ is a non-empty subset of a power set of the sample space $\Omega$; and $P$ is a probability. Values of the random variables in the random variable set $X$ are all in the countable set: $X_i = s_i$, $s_i \in \mathbf{s}$, and a conditional probability of the random variables satisfies a relationship shown in Formula 1:

$$p\left(X_{t+1} \mid X_t, \ldots, X_1\right) = p\left(X_{t+1} \mid X_t\right) \text{ Formula 1}$$

In this case, $X$ is referred to as the Markov chain, the countable set $s$ is referred to as the state space (state space), and a value of the Markov chain in the state space is referred to as a state. $X_i$ is a random variable in the random variable set $X$, and i may be any integer greater than 0; and $S_i$ is an element in the countable set $s$. The countable set $s$ is a set in which a one-to-one correspondence can be established between each element in the set and each element in a natural number set.

(4) Diffusion transformer

The diffusion transformer is an artificial intelligence model that processes data according to a Markov chain principle. For data with noise, noise reduction processing can be performed on the data by using the diffusion transformer, so that data with higher quality can be obtained. The following describes a principle of performing noise reduction processing on the data by using the diffusion transformer.

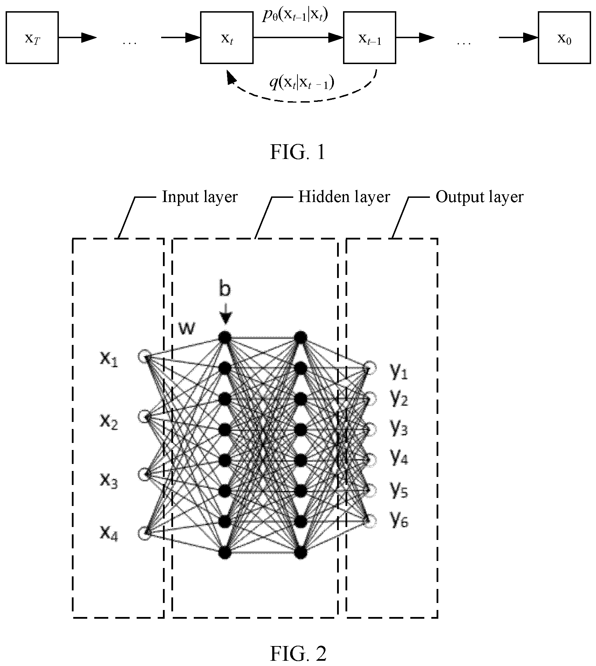

FIG. 1 is a diagram of a process of processing data by using a diffusion transformer according to an embodiment of this application. As shown in FIG. 1, given data $X_0$ complies with a distribution $q(X_0)$, and noise addition is gradually performed on the data $X_0$ in a sequence from right to left in FIG. 1. Each time the noise addition is performed, a piece of new data can be obtained. After T times of noise addition are gradually performed on the data $X_0$, T pieces of data in total from $X_1$ to $X_T$ are obtained.

Specifically, a data noise addition process may be considered as a Markov process. A conditional probability of obtaining $X_1$ to $X_T$ based on the data $X_0$ is: $q(X_1 \mid X_0) = \prod_{t=1}^{T} q(X_t \mid X_{t-1})$, where a value range of t is $1 \leq t \leq T$, $\Pi$ represents a product calculation, and a single-step transition probability is $q(X_t \mid X_{t-1}) = \mathbb{N}(X_t; \sqrt{1-\beta_t} X_{t-1}, \beta_t \mathrm{I})$. $\mathbb{N}(X_t; \sqrt{1-\beta_t} X_{t-1}, \beta_t \mathrm{I})$ represents a Gaussian distribution transformation from $X_{t-1}$ to $X_t$ in which $\sqrt{1-\beta_t} X_{t-1}$ is a mean and $\beta_t$ is a variance; and a variance parameter $\beta_t$ is a designable parameter. In the data noise addition process, when a quantity T of noise addition steps is large enough, and $\beta_t$ is selected properly, finally obtained $X_T$ conforms to a Gaussian distribution in which the mean is 0 and the variance is I, namely, $X_T \sim \mathbb{N}(0, \mathrm{I})$.

In this case, noise reduction processing may be performed on the data through a reverse process (namely, a data processing process from left to right in FIG. 1). Specifically, starting from a sample obtained through sampling in the Gaussian distribution, a data sample that meets a given distribution is gradually generated. Because it is difficult to calculate a transition probability $q(X_t \mid X_{t-1})$ of the reverse process, a neural network may be used for approximation. For example, the transition probability of the reverse process is approximated by using $p_\theta(X_t \mid X_{t-1})$, and $p_\theta(X_t \mid X_{t-1})$ is enabled to conform to the Gaussian distribution, namely, $p_\theta(X_t \mid X_{t-1}) = \mathbb{N}(X_{t-1}; \mu_\theta(X_t, t), \Sigma_\theta(X_t, t))$.

$\mathbb{N}(X_{t-1}; \mu_\theta(X_t, t), \Sigma_\theta(X_t, t))$ represents a Gaussian distribution transformation from $X_t$ to $X_{t-1}$ in which $\mu_\theta(X_t, t)$ is the mean and $\Sigma_\theta(X_t, t)$ is the variance; and both the mean $\mu_\theta(X_t, t)$ and the variance $\Sigma_\theta(X_t, t)$ may be approximated by using the neural network. It is found through experiments that a variance item has small impact, and may be usually fixed, for example, $\Sigma_\theta(X_t, t) = \sigma_t^2 \mathrm{I}$, where $\sigma_t$ is a parameter that is not learned, namely, $\sigma_t$ is a designable parameter. The mean $\mu_\theta(X_t, t)$ is learned by using the neural network, that is, an input of the neural network is data $X_t$ of a $t^{\text{th}}$ step and a step index *t*, and a trainable parameter is *0*.

The experiments show that the neural network may also be used to approximately express a noise term $\varepsilon_\theta(X_t, t)$, where the noise term $\varepsilon_\theta(X_t, t)$ represents a noise addition parameter from $X_{t-1}$ to $X_t$, and the generated data $X_0$ is then

obtained by using
$$X_{t-1} = \frac{1}{\sqrt{\alpha_t}}\left(X_t - \frac{1-\alpha_t}{\sqrt{1-\overline{\alpha_t}}}\varepsilon_\theta(X_t, t)\right) + \sigma_t^2 z$$
, where $\alpha_t = 1 - \beta_t$, $\overline{\alpha_t} = \prod_{s=1}^{t}\alpha_s$, and z = 0 when *t* = 1, or $z \sim \mathcal{N}(0, I)$ when *t* > 1.

Simply, as shown in FIG. 1, the noise addition is gradually performed on the raw data $X_0$, so that the data $X_T$ whose noise meets the Gaussian distribution can be finally obtained. The diffusion transformer is used, to gradually perform noise reduction processing on the data $X_T$, so that the data $X_0$ can be finally obtained through restoration. The diffusion transformer is a neural network model, for example, a fully connected neural network, a convolutional neural network, or a residual neural network. A specific model structure of the diffusion transformer is not limited in this embodiment.

For ease of understanding, the following uses the fully connected neural network as an example to describe the neural network and a training method of the neural network. The fully connected neural network is also referred to as a multilayer perceptron (multilayer perceptron, MLP). FIG. 2 is a diagram of a partial structure of a fully connected neural network according to an embodiment of this application. As shown in FIG. 2, one MLP includes one input layer (left side), one output layer (right side), and a plurality of hidden layers (middle).

Optionally, data corresponding to the input layer in FIG. 2 may be referred to as input data. The input data may include data needed for training or data needed for inference, for example, the data $X_t$ in FIG. 1. The plurality of hidden layers in FIG. 2 are deployed with corresponding model parameters, and are used to process the input data based on the model parameters. Data corresponding to the output layer in FIG. 2 may be referred to as output data, and is data obtained by processing the input data by the plurality of hidden layers, for example, the data $X_0$ in FIG. 1.

In addition, each layer of the MLP includes several nodes, which are referred to as neurons. Neurons at two neighboring layers are connected to each other in pairs.

Optionally, considering the neurons at the two neighboring layers, an output h of a neuron at a lower layer is a value obtained by performing an activation function on a weighted sum of outputs x of all neurons that are at an upper layer and that are connected to the neuron at the lower layer. This may be represented as the following formula 2:

$$\boldsymbol{h} = f(\boldsymbol{wx} + \boldsymbol{b}) \quad \text{Formula 2}$$

*w* is a weight matrix, *b* is a bias vector, and *f* is the activation function.

Further, an output of the neural network may be represented as the following formula 3:

$$\boldsymbol{y} = f_n(\boldsymbol{w}_n f_{n-1}(\ldots) + \boldsymbol{b}_n) \quad \text{Formula 3}$$

n is a quantity of layers of the neural network, and a value of n is an integer greater than 1. In other words, the neural network may be understood as a mapping relationship from an input data set to an output data set. The neural network is usually initialized randomly, and a process of obtaining the mapping relationship from random *w* and *b* by using existing data is referred to as training of the neural network.

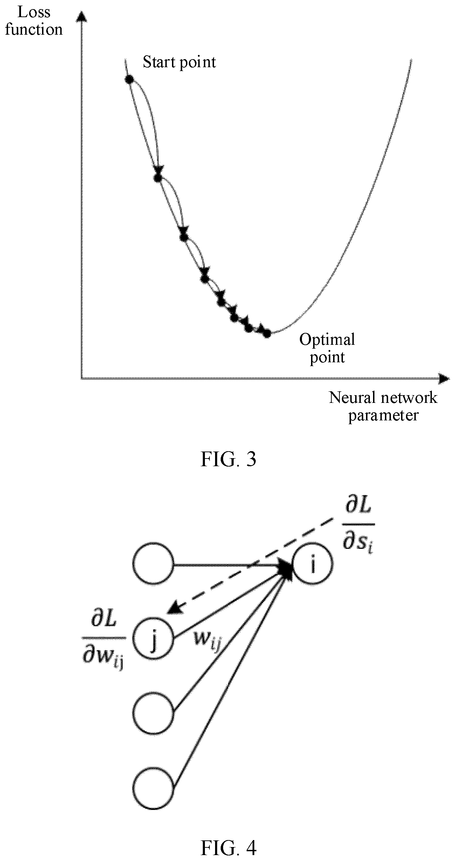

Optionally, a specific training manner is to evaluate an output result of the neural network by using a loss function (loss function). FIG. 3 is a diagram of a process of training a neural network according to an embodiment of this application. As shown in FIG. 3, an error may be backpropagated, and neural network parameters (including *w* and *b*) can be iteratively optimized by using a gradient descent method until a loss function reaches a minimum value, that is, an "optimal point" in FIG. 3. It may be understood that a neural network parameter corresponding to the "optimal point" in FIG. 3 may be used as a neural network parameter in trained AI model information.

Optionally, a gradient descent process may be represented as the following formula 4:

$$\theta \leftarrow \theta - \eta\frac{\partial L}{\partial \theta} \quad \text{Formula 4}$$

$\theta$ is a to-be-optimized parameter (including *w* and *b*), L is the loss function, $\eta$ is a learning rate and is for controlling a step of gradient descent, $\partial$ represents obtaining a partial derivative, $\partial L$ is a partial derivative of the loss function L, and $\partial\theta$ is a partial derivative of the to-be-optimized parameter.

Further, a chain rule for obtaining a partial derivative may be used in a backpropagation process. FIG. 4 is a diagram of a process in which a neural network performs backpropagation according to an embodiment of this application. As shown in FIG. 4, a gradient of a parameter of a previous layer may be obtained by recursively calculating a gradient of a parameter at a latter layer. This may be expressed as the following formula 5:

$$\frac{\partial L}{\partial w_{ij}} = \frac{\partial L}{\partial s_i} \frac{\partial s_i}{\partial w_{ij}} \quad \text{Formula 5}$$

$w_{ij}$ represents a weight of connecting a node j to a node i, and $s_i$ represents a weighted sum of inputs on the node i.

The foregoing describes the technical terms in embodiments of this application. The following describes scenarios to which methods provided in embodiments of this application are applied.

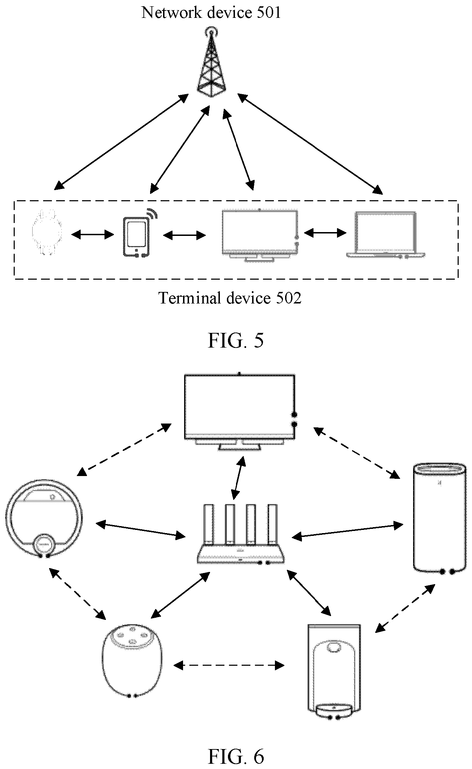

FIG. 5 is a diagram of an architecture of a wireless communication system according to an embodiment of this application. As shown in FIG. 5, the wireless communication system includes a network device 501 and a terminal device 502. The terminal device 502 may include one or more terminal devices, for example, a smart band, a smartphone, a smart television, and a notebook computer shown in FIG. 5. A wireless connection is established between the network device 501 and each terminal device in the terminal device 502, and a wireless connection may also be established between the terminal devices in the terminal device 502. In the wireless communication system shown in FIG. 5, the network device 501 may send, to the terminal device 502, downlink data, for example, a model that needs to be trained. Each terminal device in the terminal device 502 may send, to the network device 501, uplink data, for example, a trained model. In addition, the terminal devices in the terminal device 502 may further send data to each other, for example, data needed in a model training process or data needed in a model inference process.

It should be noted that the wireless communication system mentioned in this embodiment of this application includes but is not limited to communication systems such as a 5th generation mobile communication technology (5th Generation Mobile Communication Technology, 5G) communication system, a 6G communication system, a satellite communication system, a short-distance communication system, a narrowband internet of things (Narrowband Internet of Things, NB-IoT) system, a global system for mobile communications (Global System for Mobile Communications, GSM), an enhanced data rates for GSM evolution (Enhanced Data rates for GSM Evolution, EDGE) system, a wideband code division multiple access (Wideband Code Division Multiple Access, WCDMA) system, a code division multiple access 2000 (Code Division Multiple Access, CDMA 2000) system, and a time division-synchronous code division multiple access (Time Division-Synchronization Code Division Multiple Access, TD-SCDMA) system, and a long term evolution (Long Term Evolution, LTE) system. A specific architecture of the wireless communication system is not limited in this embodiment of this application.

FIG. 6 is a diagram of an architecture of a smart home communication system according to an embodiment of this application. As shown in FIG. 6, in a smart home scenario, various smart home products are connected to each other through a wireless network, so that the smart home products can transmit data to each other. In FIG. 6, smart home products such as a smart television, a smart air purifier, a smart water dispenser, a smart sound box, and a robotic vacuum cleaner are used as an example. These smart home products are all connected to a same wireless network by using a wireless router, to implement data exchange between the smart home products. In addition to the smart home products in the foregoing example, during actual application, another type of smart home product may be further included, for example, a smart home product like a smart refrigerator, a smart cooker hood, or a smart curtain. A type of the smart home product is not limited in this embodiment.

In addition, different smart home products may alternatively be directly connected to each other in a wireless manner, and do not need to access the same wireless network by using the wireless router. For example, the smart home products are wirelessly connected to each other by using Bluetooth.

In addition to the scenarios described in FIG. 5 and FIG. 6, the methods provided in embodiments of this application may be further applied to another communication system scenario. For example, in a smart factory scenario, different devices (for example, devices such as a smart robot, a lathe, and a transportation vehicle) are connected to each other through the wireless network, and transmit data to each other through the wireless network. A specific scenario to which data processing methods are applied is not limited in this embodiment of this application.

The foregoing describes the scenarios to which the methods provided in embodiments of this application is applied. For ease of understanding, the following first describes a model training method performed in a model training phase in embodiments of this application, and then further describes a data processing method performed in a model inference phase in embodiments of this application.

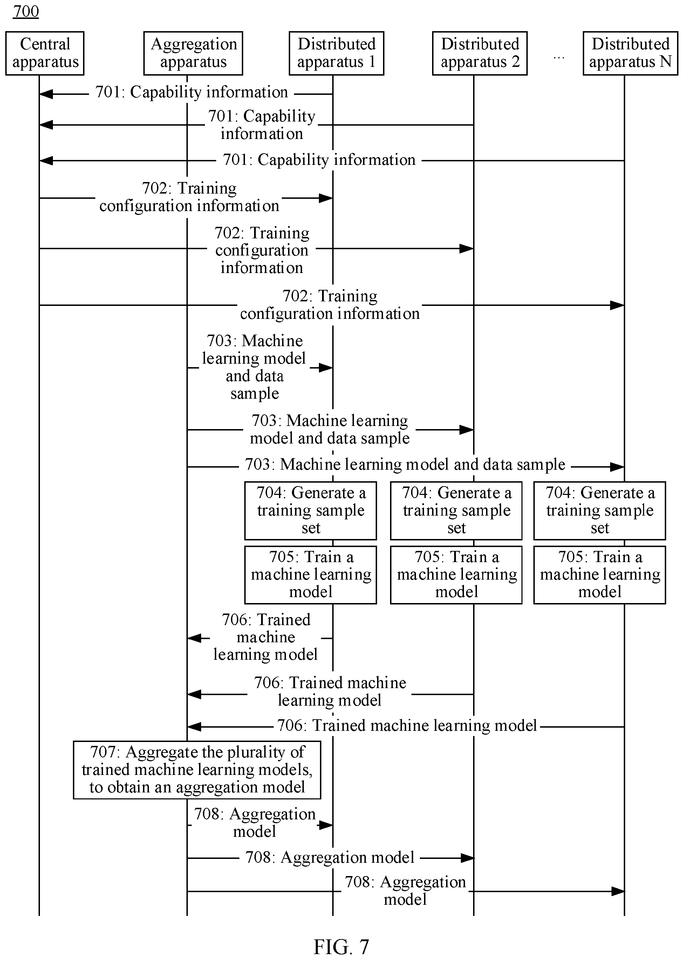

FIG. 7 is a schematic flowchart of a model training method according to an embodiment of this application. As shown in FIG. 7, the model training method includes the following steps 701 to 708.

Step 701: A central apparatus receives a plurality of pieces of capability information.

In this embodiment, the central apparatus is configured to: obtain the capability information of distributed apparatuses, and allocate training tasks to the distributed apparatuses based on the capability information of the distributed apparatuses. The plurality of pieces of capability information received by the central apparatus are from a plurality of different distributed apparatuses (for example, a distributed apparatus 1 to a distributed apparatus N shown in FIG. 7). In addition, each of the plurality of pieces of capability information indicates a capability that is related to model training and that is on the distributed apparatus. Simply, each distributed apparatus collects a capability that is related to model training and that is on the apparatus, and feeds back, to the central apparatus by sending capability information to the central apparatus, the capability that is related to the model training and that is on the distributed apparatus.

Specifically, the central apparatus is, for example, the terminal device or the network device described above. Alternatively, the central apparatus is an apparatus configured to implement a function of the foregoing terminal device or network device. For example, the central apparatus is a chip or a chip system in the terminal device or the network device. The distributed apparatus is, for example, the foregoing terminal device, or an apparatus configured to implement the function of the foregoing terminal device. In a specific example, the central apparatus may be the foregoing base station, and the distributed apparatus may be a terminal device like a smart band, a smart watch, a smart television, a smartphone, or a notebook computer.

Optionally, the capability that is related to the model training and that is on the distributed apparatus may include one or more of capabilities such as a computing capability, a storage capability, and a communication capability of the distributed apparatus. The computing capability may be measured by using a quantity of times that the distributed apparatus can perform an operation per second. The storage capability may be measured by using a size of a storage space that is allocated to the model training and that is on the distributed apparatus. The communication capability may be measured by using a data transmission rate allocated to a model training process on the distributed apparatus. In addition to the foregoing plurality of capabilities, the capability that is related to the model training and that is on the distributed apparatus may further include another capability that can affect the model training. This is not specifically limited in this embodiment.

Step 702: The central apparatus separately sends corresponding training configuration information to the plurality of different distributed apparatuses based on the plurality of pieces of capability information.

After receiving the plurality of pieces of capability information, the central apparatus can obtain capabilities of performing model training by the distributed apparatuses participating in the model training. Based on the capabilities of performing model training by the distributed apparatuses, the central apparatus can determine the training configuration information of the distributed apparatuses in an entire model training phase. The training configuration information is a specific training task that needs to be executed by the distributed apparatus in the model training phase.

For example, it can be learned from the foregoing descriptions of the diffusion transformer that, a process of performing noise reduction processing on data by using the diffusion transformer is actually a process of continuously processing the data by using a same machine learning model, to gradually reduce noise in the data and obtain high-quality data. A larger quantity of times that the diffusion transformer performs noise reduction processing on the data indicates higher quality of obtained data.

Simply, the process of continuously processing the data by using the machine learning model may be considered as a Markov chain, and performing one-time processing on the data by using the machine learning model may be considered as a link in the Markov chain. The central apparatus may split the Markov chain into a plurality of sub-chains, and configure, based on the capabilities of the distributed apparatuses, the sub-chains obtained through splitting into different distributed apparatuses. After the central apparatus configures, to the different distributed apparatuses, the sub-chains obtained through splitting, the different distributed apparatuses are configured to execute different training tasks. For example, a distributed apparatus 1 executes a training task 1, a distributed apparatus 2 executes a training task 2, and a distributed apparatus 3 executes a training task 3. Alternatively, some distributed apparatuses may be configured to perform a same training task. For example, a distributed apparatus 1 executes a training task 1, a distributed apparatus 2 also executes the training task 1, and a distributed apparatus 3 executes a training task 2.

For example, the training configuration information sent by the central apparatus indicates a quantity of times that the machine learning model trained on the distributed apparatus processes input data. In addition, because the distributed apparatuses are respectively responsible for different links in the training phase, quality requirements on input data of the machine learning models trained on the distributed apparatuses are also different. Therefore, the training configuration information further indicates a requirement on the input data of the machine learning model trained on the distributed apparatus.

For example, it is assumed that a training task in the entire training phase is: performing, by using the machine learning model, T times of processing on data $X_T$ (input data) on which noise addition processing is performed T times, to obtain data $X_0$. In this case, the training task may be divided into three different training subtasks, which are deployed on different distributed apparatuses. A $1^{st}$ training subtask may be performing, by using the machine learning model, n times of processing on the data $X_T$ on which the noise addition processing is performed T times, to obtain data $X_{T-n}$. A $2^{nd}$ training subtask may be performing, by using the machine learning model, k times of processing on data $X_{T-m}$ on which the noise addition processing is performed T-m times, to obtain data $X_{T-m-k}$. A $3^{rd}$ training subtask may be performing, by using the machine learning model, w times of processing on data $X_w$ on which the noise addition processing is performed for w times, to obtain the data $X_0$.

Step 703: An aggregation apparatus sends machine learning models and a target data sample to the plurality of distributed apparatuses.

In this embodiment, the aggregation apparatus is configured to: aggregate models obtained through training on the distributed apparatuses, and feed back an aggregated model to the distributed apparatuses. The aggregation apparatus and the central apparatus may be a same apparatus, or may be different apparatuses. This is not specifically limited in this embodiment.

For example, the aggregation apparatus is, for example, the terminal device or the network device described above. Alternatively, the aggregation apparatus is an apparatus configured to implement a function of the foregoing terminal device or network device. For example, the aggregation apparatus is a chip or a chip system in the terminal device or the network device. In a specific example, the central apparatus may be the foregoing base station, the aggregation apparatus may be the foregoing base station or server, and the distributed apparatus may be a terminal device like a smart band, a smart watch, a smart television, a smartphone, or a notebook computer.

Optionally, the machine learning models sent by the aggregation apparatus to the plurality of distributed apparatuses are the same, so that the plurality of distributed apparatuses perform model training on the same machine learning model. In addition, a parameter in the machine learning model sent by the aggregation apparatus may be an initial parameter obtained through random initialization. For example, the machine learning model sent by the aggregation apparatus may be the diffusion transformer, and the machine learning model is used to perform noise reduction processing on the data.

In addition, the target data samples sent by the aggregation apparatus to the plurality of distributed apparatuses may also be the same, so that different distributed apparatuses generate corresponding training sample sets based on the training configuration information. The target data sample sent by the aggregation apparatus to the plurality of distributed apparatuses may be data with high quality. For example, the target data sample (for example, $X_0$ in FIG. 1) is an image without noise. A process in which the distributed apparatus trains the machine learning model is as follows: The distributed apparatus first performs noise addition processing on the target data sample, to obtain a training sample with low quality. Then, the distributed apparatus inputs the training sample into the machine learning model, performs noise reduction processing on the training sample by using the machine learning model, and trains the machine learning model based on an output result of the machine learning model.

Optionally, the target data sample sent by the aggregation apparatus may be determined based on a type of the machine learning model that needs to be trained. A specific type of the target data sample is not specifically limited in this embodiment.

For example, when the machine learning model that needs to be trained is a machine learning model of each module of a transceiver in a communication system, for example, a transmitter machine learning model, a receiver machine learning model, a channel estimation machine learning model, a channel compression feedback machine learning model, a precoding machine learning model, a beam management machine learning model, or a positioning machine learning model, the data sample may be channel data.

For another example, when the machine learning model that needs to be trained is an image processing model, for example, an image classification model, an image enhancement model, an image compression model, or an image detection model, the data sample may be image data.

For still another example, when the machine learning model that needs to be trained is a speech processing model, for example, a speech recognition model or a speech generation model, the data sample may be speech data.

It should be noted that, an execution sequence between step 702 and step 703 is not specifically limited in this embodiment. Step 703 may be performed before step 702, or step 703 and step 702 are performed simultaneously.

Step 704: The distributed apparatus generates the training sample set based on the target data sample.

The training configuration information sent by the central apparatus to the distributed apparatus indicates the quantity of times that the machine learning model trained on the distributed apparatus processes the input data (for example, $X_T$ in FIG. 1) and the requirement on the input data. Therefore, the distributed apparatus may generate the training sample set based on the target data sample (for example, $X_0$ in FIG. 1), for subsequent training of the machine learning model. Each training sample in the training sample set generated by the distributed apparatus meets the requirement that is on the input data and that is indicated by the training configuration information.

Optionally, the training sample set generated by the distributed apparatus based on the target data sample may include first data and second data, where the first data is the input data of the machine learning model in the training process, and the second data is a training label of the first data. The training label of the input data of the machine learning model is used to generate a loss function with reference to the output result of the machine learning model, so that the machine learning model is updated based on the loss function, and the training of the machine learning model is completed. The first data and the second data are used as an example. In one round of iterative training of the machine learning model, the first data is input into the machine learning model, to obtain an output result of the machine learning model; then, a loss function is constructed by calculating a difference between the output result of the machine learning model and the second data (that is, a training label of the input data); and finally, a parameter in the machine learning model is updated based on a value of the loss function, to complete the one round of the iterative training of the machine learning model.

In a process of generating the first data and the second data, the distributed apparatus performs processing (for example, performs noise addition processing) on the target data sample based on the requirement on the input data and the quantity of times that the machine learning model processes the input data that are indicated by the training configuration information, to obtain the second data. Then, the distributed apparatus performs processing (for example, performs noise addition processing) on the second data based on the quantity of times that the machine learning model processes the input data that is indicated by the training configuration information, to obtain the first data.

The requirement on the input data indicates what data the input data is. For example, the input data is data obtained through the noise addition processing performed on the target data sample for a specific quantity of times. After processing the target data sample, the distributed apparatus obtains the second data, and the quantity of times that the distributed apparatus processes the target data sample is a difference between the quantity of times indicated in the requirement on the input data and the quantity of times that the machine learning model processes the input data.

Then, the distributed apparatus processes the second data based on the quantity of times that the machine learning model processes the input data that is indicated by the training configuration information, to obtain the first data.

For example, assuming that the requirement on the input data indicates that the input data is data obtained by performing M times of noise addition processing on the target data sample, and the quantity of times that the machine learning model processes the input data is N, the distributed apparatus may perform M-N to M times of noise addition processing on the target data sample $X_0$, to obtain data $\{X_{M-N}, X_{M-N+1}, ..., X_M\}$, use the data $X_{M-N}$ as the second data, and use $X_M$ as the first data. That is, the first data (the input data) is the data $X_M$ obtained by performing M times of noise addition processing on the target data sample $X_0$, and the second data is the data $X_{M-N}$ obtained by performing M-N times of noise addition processing on the target data sample $X_0$, namely, a training label, and is used, in one round of iterative training (such as training for the noise reduction processing) of the machine learning model, as an object used for difference comparison with an output result obtained by inputting the first data into the machine learning model, to determine a loss function to update a parameter in the machine learning model, to complete the round of iterative training of the machine learning model.

In other words, during actual application, the distributed apparatus first performs M-N times of noise addition processing on the target data sample based on the requirement on the input data and the quantity of times that the machine learning model processes the input data that are indicated by the training configuration information, to obtain the second data, and then performs N times of noise addition processing on the second data, to obtain the first data.

For example, it is assumed that the target data sample obtained by the distributed apparatus from the aggregation apparatus is the data $X_0$, and the training configuration information indicates that the quantity of times that the machine learning model trained on the distributed apparatus processes the input data is 5, and the requirement on the input data of the machine learning model indicates that the input data is data obtained by performing noise addition on the target data sample for 15 times. In this case, the distributed apparatus may first perform 10 to 15 times of noise addition processing on the target data sample $X_0$ obtained from the aggregation apparatus, to obtain data $\{X_{10}, X_{11}, X_{12}, X_{13}, X_{14}, X_{15}\}$. The data $X_{10}$ is data (that is, second data) obtained by performing 10 times of noise addition processing on the target data sample $X_0$. The data $X_{15}$ is data (that is, first data) obtained by performing 15 times of noise addition processing on the target data sample $X_0$, and the data $X_{15}$ may be data obtained by performing 5 times of noise addition processing on $X_{10}$. Then, in a training process, the data $X_{15}$ is used as input data (that is, the foregoing first data) of the machine learning model, and the data $X_{10}$ is used as a training label (that is, the foregoing second data) of the input data. Optionally, a manner in which the distributed apparatus performs noise addition processing on the data sample may be specifically that the distributed apparatus performs sampling based on a conditional probability distribution shown in Formula

$$q(X_t \mid X_0) = \mathbb{N}(X_t;\ \sqrt{\overline{\alpha}_t}X_0,\ (1-\overline{\alpha}_t)\ \mathrm{I})$$

, to obtain the input data.

Step 705: The distributed apparatus trains the machine learning model based on the training sample set, to obtain a trained machine learning model.

For example, after generating the training sample set, the distributed apparatus inputs, into the machine learning model, the first data that is in the training sample set and that is used as the input data, to obtain output data of the machine learning model; and then, the distributed apparatus calculates a loss function based on the training label (that is, the second data) of the input data and the output data, and updates the machine learning model based on a value of the loss function, to obtain the trained machine learning model. For a specific process of updating the machine learning model based on the loss function, refer to the foregoing descriptions. Details are not described herein again.

Step 706: The distributed apparatus sends the trained machine learning model to the aggregation apparatus.

After training the machine learning models based on the training samples generated on the apparatuses, and obtaining trained machine learning models, the distributed apparatuses send the trained machine learning models to the aggregation apparatus, so that the aggregation apparatus aggregates the machine learning models.

Step 707: The aggregation apparatus aggregates the trained machine learning models sent by the distributed apparatuses, to obtain an aggregation model.

Optionally, because the machine learning models trained by the distributed apparatuses are models with a same structure, the machine learning models obtained by the distributed apparatuses through training are models with the same structure but different parameters. After receiving the plurality of trained machine learning models sent by the distributed apparatuses, the aggregation apparatus may perform weighted summation on the parameters in the plurality of trained machine learning models, to obtain a new parameter, where the new parameter is a parameter in the aggregation model. In other words, after the aggregation apparatus aggregates the trained machine learning models sent by the distributed apparatuses, a structure of the obtained aggregation model does not change, but the parameter in the aggregation model changes, and the parameter in the aggregation model is obtained based on the trained machine learning models sent by the distributed apparatuses.

It should be noted that, in addition to the foregoing manner of performing weighted summation on the parameters in the plurality of trained machine learning models, to obtain the aggregation model, the aggregation apparatus may further aggregate the models in another manner. This is not specifically limited in this embodiment.

Step 708: The aggregation apparatus sends the aggregation model to the distributed apparatuses.

After aggregating the models, the aggregation apparatus sends the aggregation model to the distributed apparatuses, so that the distributed apparatuses continue to train the aggregation models.

It may be understood that a process in which the distributed apparatuses perform a 1st round of iterative training on the machine learning models is described in the foregoing steps 701 to 708. During actual application, the distributed apparatuses may need to perform a plurality of rounds of iterative training on the machine learning models. Therefore, after the distributed apparatuses receive the aggregation model sent by the aggregation apparatuses, the distributed apparatuses and the aggregation apparatus cyclically perform the foregoing steps 704 to 708 until a machine learning model training termination condition is met. The machine learning model training termination condition may be that a quantity of rounds of iterative training performed by the distributed apparatus on the machine learning model reaches a preset quantity of rounds; or performance of a machine learning model obtained by the distributed apparatus through training meets a preset requirement.

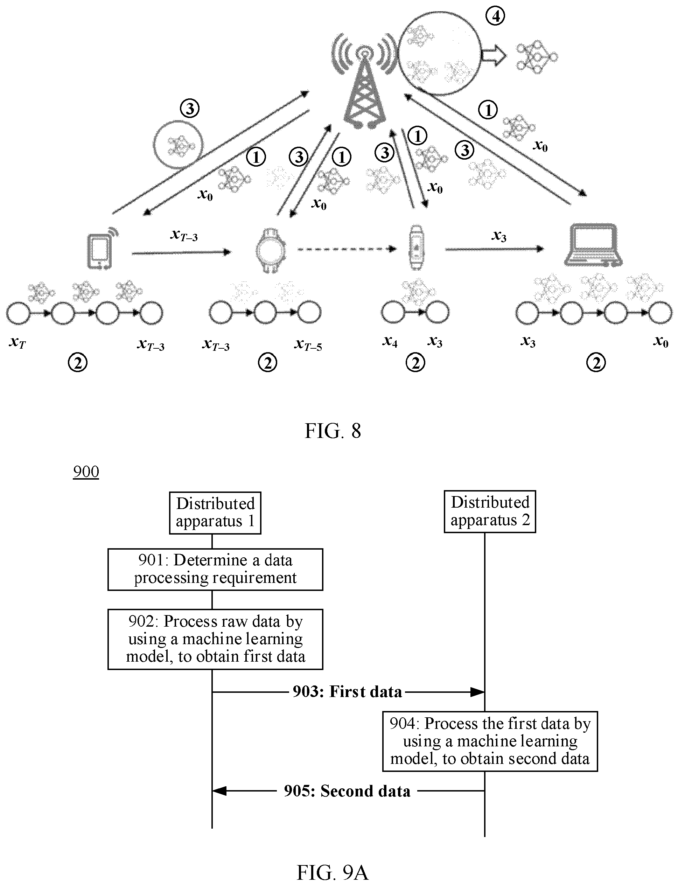

For ease of understanding, the following describes, in detail with reference to specific examples, a model training method provided in embodiments of this application. As shown in FIG. 8, an example in which a base station is an aggregation apparatus, and terminal devices such as a smartphone, a smart watch, a smart band, and a notebook computer are a plurality of distributed apparatuses is used, to describe in detail a process of a model training method. As shown in FIG. 8, the process of the model training method includes the following four phases.

Phase 1: The base station sends a target data sample $X_0$ and a machine learning model to the plurality of terminal devices participating in model training.

In a process of a 1st round of iterative training on the machine learning model, the machine learning model sent by the base station to the plurality of terminal devices may be a machine learning model obtained by randomly initializing parameters. In a process of an $N^{th}$ (N is greater than 1) round of iterative training, the machine learning model sent by the base station to the plurality of terminal devices is an aggregation model obtained by aggregating a plurality of machine learning models obtained through a previous round of iterative training.

Phase 2: The plurality of terminal devices separately generate a training sample based on the target data sample $X_0$, and train the machine learning model based on the training sample.

Because different training content is allocated to the terminal devices such as the smartphone, the smart watch, the smart band, and the notebook computer, each terminal device separately generates, based on the target data sample, the training sample matching the training content, and trains, based on the training sample, the machine learning model sent by the base station.

For example, as shown in FIG. 8, a requirement on input data of a machine learning model trained on the smartphone indicates that the input data is data obtained by performing T times of noise addition on the target data sample $X_0$; and the machine learning model on the smartphone needs to process the input data three times, to obtain output data. Therefore, in a process of generating a training sample, the smartphone performs T-3 times to T times of noise addition processing on the target data sample $X_0$, to obtain data $\{X_{T-3}, X_{T-2}, X_{T-1}, X_T\}$. Based on the data $\{X_{T-3}, X_{T-2}, X_{T-1}, X_T\}$, the smartphone may construct and obtain a group of training samples $(X_T, X_{T-3})$ including input data and a training label, where the data $X_T$ in the training sample is the input data, and the data $X_{T-3}$ is the training label. In a training process, the smartphone obtains, by reusing to-be-trained machine learning models, a general model formed by sequentially connecting three same to-be-trained machine learning models, where an input of a latter machine learning model in the general model is an output of a former machine learning model; and then, the smartphone inputs input data in a training sample into the general model, to obtain output data output by the general model, to construct, based on the output data and a training label in the training sample, a loss function used to update the machine learning model.

For example, for the training sample $(X_T, X_{T-3})$, the data $X_{T-3}$ is input into the general model, to obtain output data $X_T{'}$ of the general model, and a value of a loss function is obtained through calculation based on the output data $X_T{'}$ and the training label $X_T$. Then, a parameter in the machine learning model is updated based on the value that is of the loss function and that is obtained through calculation.

Optionally, because the general model is obtained by sequentially connecting the three same machine learning models, each of the machine learning models in the general model actually has corresponding output data. When the machine learning model is trained, in addition to constructing the loss function based on the output data of the general model (that is, output data of the $3^{rd}$ machine learning model in the general model), the loss function may alternatively be constructed based on output data of another machine learning model in the general model.

For example, after the data $X_{T-3}$ is input into the general model, output data $X_{T-2}$' output by the $1^{st}$ machine learning model in the general model, output data $X_{T-1}$' output by the $2^{nd}$ machine learning model in the general model, and the output data $X_T$' output by the $3^{rd}$ machine learning model in the general model are obtained. Then, a loss function 1 is constructed based on the training label $X_{T-2}$ and the output data $X_{T-2}$', a loss function 2 is constructed based on the training label $X_{T-1}$ and the output data $X_{T-1}$', and a loss function 3 is constructed based on the training label $X_T$ and the output data $X_T$'. Finally, a total loss function is obtained through calculation based on the loss function 1, the loss function 2, and the loss function 3, and the machine learning model is updated based on a value of the total loss function, to obtain a trained machine learning model.

Similarly, for the smart watch, input data of a machine learning model trained on the smart watch is $X_{T-3}$, that is, data obtained by performing T-3 times of noise addition on the target data sample $X_0$. In addition, the machine learning model on the smart watch needs to process the input data two times, to obtain output data. In a process of generating a training sample, the smart watch performs T-5 times to T-3 times of noise addition processing on the target data sample $X_0$, to obtain data $\{X_{T-5}, X_{T-4}, X_{T-3}\}$; and a plurality of groups of training samples are obtained based on the data $\{X_{T-5}, X_{T-4}, X_{T-3}\}$, each of the plurality of groups of training samples includes input data and a training label, and the plurality of groups of training samples are, for example, $(X_{T-5}, X_{T-4})$, $(X_{T-4}, X_{T-3})$, and $(X_{T-5}, X_{T-3})$. With reference to a process in which the smartphone trains the machine learning model based on training data, the smart watch trains the machine learning model based on generated training data, and can also obtain a trained machine model.

For the smart band, input data of a machine learning model trained on the smart band is $X_4$, that is, data obtained by performing noise addition on the target data sample $X_0$ four times; and the machine learning model on the smart band needs to process the input data one time, to obtain output data. In a process of generating a training sample, the smart band performs noise addition processing three times and four times on the data sample $X_0$, to obtain data $\{X_3, X_4\}$, to obtain the training sample $\{X_3, X_4\}$ through construction. The smart band trains the machine learning model based on the generated training sample $\{X_3, X_4\}$, to obtain a trained machine model.

For the notebook computer, input data of a machine learning model trained on the notebook computer is $X_3$, that is, data obtained by performing noise addition on the target data sample $X_0$ three times; and the machine learning model on the notebook computer needs to perform noise reduction processing on the input data three times, to obtain output data. In a process of generating a training sample, the notebook computer performs noise addition processing zero to three times on the data sample $X_0$, to obtain data $\{X_0, X_1, X_2, X_3\}$, to obtain the training sample $\{X_0, X_3\}$ through construction. The smart band trains the machine learning model based on the generated training sample $\{X_0, X_3\}$, to obtain a trained machine model. In addition to the smartphone, the smart watch, the smart band, and the notebook computer shown in FIG. 8, another terminal device may also be responsible for training a machine model based on data between the data $X_{T-5}$ and the data $X_4$. This is not shown one by one in FIG. 8.

Optionally, in a process in which the terminal devices generate training data, the terminal devices may send the generated training data to each other, to avoid that the terminal devices independently and repeatedly generate same training data, thereby improving efficiency of generating the training data. For example, for the smartphone, the smartphone needs to generate the data $\{X_{T-3}, X_{T-2}, X_{T-1}, X_T\}$, but the smart watch also needs to generate the data $X_{T-3}$. Therefore, the smartphone may send the generated data $X_{T-3}$ to the smart watch, so that a process of generating the data $X_{T-3}$ is avoided.

Phase 3: The plurality of terminal devices respectively send the trained machine learning models to the base station.

Because the terminal devices are responsible for different training content, and the training data used to train the machine learning models is also different, the machine learning models obtained by the terminal devices through training are also different usually. After ending one or more rounds of model iterative training, to obtain the trained machine learning models, the terminal devices send the trained machine learning models to the base station, so that the base station aggregates the trained machine learning models.

Phase 4: The base station aggregates the plurality of trained machine learning models, to obtain an aggregation model.

After aggregating the trained machine learning models sent by the terminal devices to obtain the aggregation model, the base station may continue to send the aggregation model to the terminal devices, so that the terminal devices continue to perform iterative training on the aggregation model. Finally, after a machine learning model trained on the terminal device meets a model training termination condition, the terminal device no longer trains an aggregation model sent by the base station, but uses, as a model used for model inference, the aggregation model sent by the base station for a last time. That is, the aggregation model is used to perform a subsequent data processing task.

The foregoing describes a process in which the plurality of distributed apparatuses perform joint training on the machine learning model. The following describes a process in which a plurality of distributed apparatuses perform joint data processing by using the machine learning model. There are a plurality of scenarios in which the plurality of distributed apparatuses perform joint data processing by using the machine learning model. The following describes a joint data processing process in the plurality of scenarios in detail with reference to the accompanying drawings.

It should be noted that the plurality of distributed apparatuses that perform joint processing on the data by using the machine learning model described in this embodiment may be the plurality of distributed apparatuses that perform joint training on the machine learning model. That is, after performing joint training to obtain the machine learning model, the plurality of distributed apparatuses perform joint processing on the data by using the same machine learning model. Alternatively, in this embodiment, the plurality of distributed apparatuses may perform joint data processing by using a preset machine learning model, that is, the plurality of distributed apparatuses do not perform a process of jointly training the machine learning model. Simply, two processes of the process of jointly training the machine learning model and the joint data processing process may be integrated or independent. This is not specifically limited in this embodiment.

FIG. 9A is a schematic flowchart of a data processing method 900 according to an embodiment of this application. As shown in FIG. 9A, the data processing method 900 includes the following steps 901 to 905.

Step 901: A distributed apparatus 1 determines a data processing requirement.

In this embodiment, the data processing requirement in the distributed apparatus 1 is to process raw data with noise, to obtain target data needed by the distributed apparatus 1. Quality of the target data is higher than quality of the raw data, that is, noise in the target data is less than the noise in the raw data. Usually, the target data expected to be obtained by the distributed apparatus 1 may be data used to execute another model training task. Therefore, the distributed apparatus 1 may determine a data processing requirement based on a requirement of another model training task on needed data. The data processing requirement indicates a degree of processing the raw data. For example, the distributed apparatus 1 expects to obtain image data with high quality, so that an image classification model can be subsequently trained based on the image data with the high quality. Therefore, the distributed apparatus 1 may determine, based on a requirement of the image classification model for input data, a degree of processing original image data.

For example, when the raw data is channel data, the target data expected to be obtained by the distributed apparatus 1 may be data used to train a model like a transmitter machine learning model, a receiver machine learning model, or a channel estimation machine learning model. For another example, when the raw data is the image data, the target data expected to be obtained by the distributed apparatus 1 may be data used to train a model like the image classification model, an image enhancement model, an image compression model, or an image detection model. Therefore, the distributed apparatus 1 may determine a quality requirement on the target data based on a precision requirement of a model for performing training by using the target data, and further determine the data processing requirement based on a quality difference between the target data and the raw data.

Optionally, when the raw data is processed by using a machine learning model (for example, the foregoing diffusion transformer), the data processing requirement may be a quantity of times of processing the raw data by using the machine learning model. For example, when the quality requirement on the needed data is high, the distributed apparatus 1 may determine that the data processing requirement is to sequentially process the raw data 10,000 times; or for another example, when the quality requirement on the needed data is not high, the distributed apparatus 1 may determine that the data processing requirement is to gradually process the raw data 1000 times.

Step 902: The distributed apparatus 1 processes the raw data by using the machine learning model, to obtain first data.

After determining the data processing requirement, the distributed apparatus 1 processes the raw data based on a data processing capability of the apparatus by using the machine learning model, to obtain the first data. The data processing capability of the distributed apparatus 1 cannot meet the data processing requirement of the distributed apparatus 1. Therefore, the first data obtained by the distributed apparatus 1 is not the target data expected to be obtained by the distributed apparatus 1. The data processing capability of the distributed apparatus may be related to a processing resource and a storage resource on the distributed apparatus. This is not specifically limited in this embodiment.

For example, it is assumed that the data processing requirement of the distributed apparatus 1 is to gradually process the raw data 1000 times by using the machine learning model, but the data processing capability of the distributed apparatus 1 supports the distributed apparatus 1 in gradually processing the raw data only 200 times. In this case, the distributed apparatus 1 gradually processes the raw data 200 times by using the machine learning model, to obtain the first data. The first data further needs to be processed 800 times to obtain the data that meets the data processing requirement of the distributed apparatus 1.

Optionally, a process in which the distributed apparatus 1 gradually processes the raw data 200 times by using the machine learning model may be as follows: The distributed apparatus 1 reuses the machine learning model, to obtain a general model formed by sequentially connecting 200 machine learning models; and then, the distributed apparatus 1 inputs the raw data into the general model, and the 200 machine learning models in the general model sequentially process the data, to obtain the first data. An input of any machine learning model in the general model is an output of a former machine learning model.

Alternatively, a process in which the distributed apparatus 1 gradually processes the raw data 200 times by using the machine learning model may be as follows: The distributed apparatus 1 performs one time of processing on the raw data by using the machine learning model, to obtain data obtained through one time of processing; next, the distributed apparatus 1 inputs, into the machine learning model, the data obtained through one time of processing again, to obtain data obtained through two times of processing; and then, the distributed apparatus 1 continues to input, into the machine learning model, the data obtained through two times of processing, to obtain data obtained through three times of processing. This cycle is performed until the distributed apparatus 1 performs 200 times of processing on data by using the machine learning model, to obtain the first data. In other words, the distributed apparatus 1 uses, as an input of the machine learning model in a next data processing process, data that is output after the machine learning model processes data each time, to sequentially perform a plurality of times of processing on the data based on the same machine learning model.

Optionally, the machine learning model that is on the distributed apparatus 1 and that is used to process the raw data is, for example, the foregoing diffusion transformer.

Step 903: The distributed apparatus 1 sends the first data to a distributed apparatus 2.

Because the data processing capability of the distributed apparatus 1 cannot support the distributed apparatus 1 in completing the data processing, that is, the first data obtained by the distributed apparatus 1 through processing cannot meet the data processing requirement of the distributed apparatus 1, the distributed apparatus 1 sends the first data to the distributed apparatus 2, to request the distributed apparatus 2 to assist the distributed apparatus 1 in continuing to process the first data.

Optionally, when sending the first data to the distributed apparatus 2, the distributed apparatus 1 may further send first information to the distributed apparatus 2, where the first information is for requesting the distributed apparatus 2 to process the first data. The first information may further indicate a quantity of times that the first data is to be processed, namely, a quantity of times that the distributed apparatus 2 processes the first data. For example, it is assumed that the data processing requirement of the distributed apparatus 1 is to gradually process the raw data 1000 times by using the machine learning model, but the distributed apparatus 1 gradually processes the raw data only 200 times. Therefore, the distributed apparatus 1 may indicate, in the first information, that the quantity of times that the first data is to be processed is 800. Optionally, the sending of the first data and the sending of the first information may be separately performed.

Optionally, the distributed apparatus 1 may alternatively negotiate with the distributed apparatus 2 in advance, so that the distributed apparatus 2 can determine a quantity of times that the data received from the distributed apparatus 1 needs to be processed. In this case, the distributed apparatus 1 only needs to send the first data to the distributed apparatus 2, and does not need to send the foregoing first information to the distributed apparatus 2. For example, when the distributed apparatus 1 needs to gradually process a large amount of data, the distributed apparatus 1 negotiates with the distributed apparatus 2 in advance, so that the distributed apparatus 2 can determine a quantity of times that received data needs to be processed. In this way, each time the distributed apparatus 1 processes one piece of data a specific quantity of times, the distributed apparatus 1 sends data obtained through processing to the distributed apparatus 2, so that the distributed apparatus 2 continues to process the data based on content negotiated in advance, thereby avoiding signaling overheads caused by repeated notification by the distributed apparatus 1 to the distributed apparatus 2.

In this embodiment of this application, the distributed apparatus 1 and the distributed apparatus 2 are, for example, the foregoing terminal devices, or apparatuses configured to implement the function of the foregoing terminal device. In a specific example, the distributed apparatus 1 may be a smart watch, and the distributed apparatus 2 may be a smartphone.

Step 904: The distributed apparatus 2 processes the first data by using a machine learning model, to obtain second data.

In this embodiment, a data processing capability of the distributed apparatus 2 can support the distributed apparatus 2 in assisting the distributed apparatus 1 in completing the data processing, that is, the second data obtained by the distributed apparatus 2 through processing can meet the data processing requirement of the distributed apparatus 1, and the second data is the data expected to be obtained by the distributed apparatus 1.

For example, when the distributed apparatus 1 indicates, by using the first information, the quantity of times that the distributed apparatus 2 processes the first data, the distributed apparatus 2 may gradually perform the plurality of times of processing on the first data based on the quantity of processing times indicated by the first information and by using the machine learning model, to obtain the second data. For example, when the distributed apparatus 1 indicates, in the first information, that the distributed apparatus 2 processes the first data 800 times, the distributed apparatus 2 gradually processes the first data 800 times by using the machine learning model, to obtain the second data.

It should be noted that, in this embodiment, the data processing capability of the distributed apparatus 2 can support the distributed apparatus 2 in processing the first data the quantity of times specified by the distributed apparatus 1.

The machine learning model used by the distributed apparatus 2 to process the first data may be the same as the machine learning model used by the distributed apparatus 1 to process the first data, to ensure performance of performing noise reduction processing on the first data by the distributed apparatus 2, and ensure that the second data can meet the data processing requirement of the distributed apparatus 1.

Step 905: The distributed apparatus 2 sends the second data to the distributed apparatus 1.

After the second data is obtained through processing, because the second data can meet the data processing requirement of the distributed apparatus 1, the distributed apparatus 2 sends the second data to the distributed apparatus 1, to complete assisting the distributed apparatus 1 in processing the data. In this way, after receiving the second data, the distributed apparatus 1 can execute another data processing task based on the second data, for example, execute a training task of another model based on the second data.

In this solution, machine learning models are deployed on different apparatuses, and devices on the plurality of apparatuses jointly complete data processing, so that quality of obtained data is continuously improved, thereby reducing data processing pressure of each apparatus, and ensuring that an apparatus with a weak computing capability can also obtain data with quality needed by the apparatus.

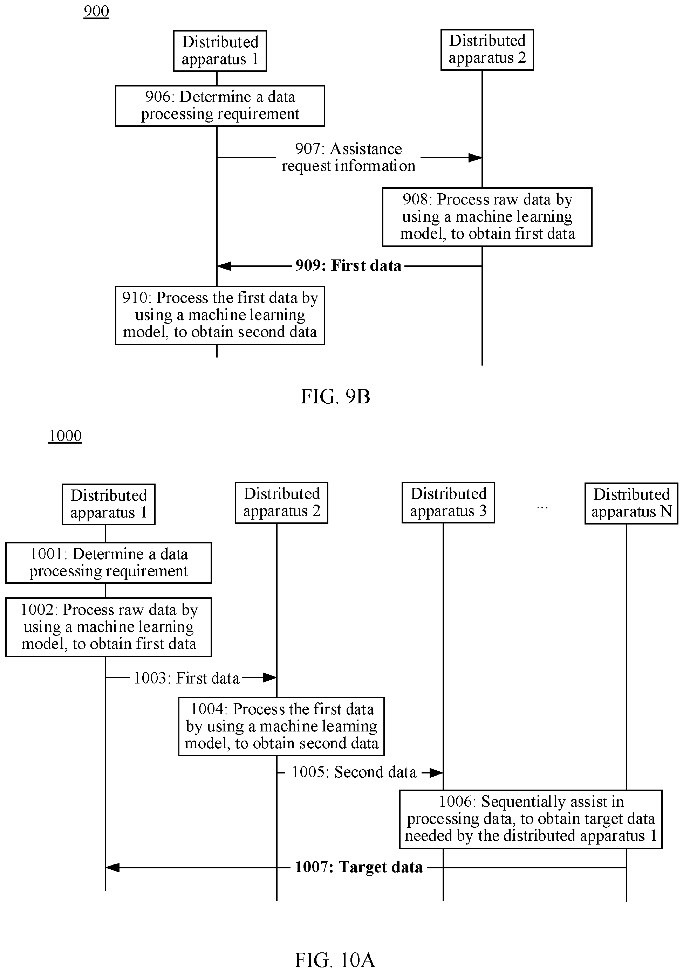

FIG. 9B is another schematic flowchart of a data processing method 900 according to an embodiment of this application. As shown in FIG. 9B, in another possible embodiment, the data processing method 900 may include the following steps 906 to 910. There is no sequence association between steps 906 to 910 and the foregoing steps 901 to 905, and steps 906 to 910 and the foregoing steps 901 to 905 may be two independent sets of steps. The distributed apparatus 1 and the distributed apparatus 2 may complete joint processing on data by performing the foregoing steps 901 to 905. The distributed apparatus 1 and the distributed apparatus 2 may alternatively complete joint processing on data by performing the foregoing steps 906 to 910.

Step 906: The distributed apparatus 1 determines a data processing requirement.

In this embodiment, step 906 is similar to step 901. For details, refer to the foregoing step 901. Details are not described herein again.

Step 907: The distributed apparatus 1 sends assistance request information to the distributed apparatus 2.

After determining the data processing requirement, the distributed apparatus 1 may determine whether a data processing capability of the apparatus can meet the data processing requirement. When determining that the data processing capability of the apparatus cannot meet the data processing requirement, the distributed apparatus 1 may send the assistance request information to the distributed apparatus 2, to request the distributed apparatus 2 to assist the distributed apparatus 1 in processing the data.

Optionally, the assistance request information sent by the distributed apparatus 1 may indicate a quantity of times that raw data is to be processed, namely, a quantity of times that the distributed apparatus 2 processes the raw data. For example, it is assumed that the data processing requirement of the distributed apparatus 1 is to gradually process the raw data 1000 times by using a machine learning model, but the data processing capability of the distributed apparatus 1 supports the distributed apparatus 1 in gradually processing the data only 200 times. Therefore, the distributed apparatus 1 may indicate, in the assistance request information, that the quantity of times that the raw data is to be processed is 800, that is, the distributed apparatus 1 indicates that the distributed apparatus 2 processes the raw data 800 times.

Step 908: The distributed apparatus 2 processes the raw data by using a machine learning model, to obtain first data.

After receiving the assistance request information sent by the distributed apparatus 1, the distributed apparatus 2 processes the raw data by using a machine learning model based on the indication of the assistance request information, to obtain first data.

For example, assuming that the assistance request information indicates that the quantity of times that the raw data is to be processed is 800, the distributed apparatus 2 processes the raw data 800 times by using the machine learning model, to obtain the first data.

Step 909: The distributed apparatus 2 sends the first data to the distributed apparatus 1.

Optionally, when sending the first data to the distributed apparatus 1, the distributed apparatus 2 may further send indication information to the distributed apparatus 1, where the indication information indicates a quantity of times that the distributed apparatus 2 processes the raw data. For example, when the distributed apparatus 2 processes the raw data 800 times by using the machine learning model to obtain the first data, the indication information sent by the distributed apparatus 2 indicates that the first data is obtained by performing processing on the raw data 800 times. It may be understood that, the quantity of times that the distributed apparatus 2 processes the raw data based on a capability of the distributed apparatus 2 may be less than the quantity of to-be-processed times that is indicated by the distributed apparatus 1.

Optionally, the sending of the first data and the sending of the indication information may be separately performed.

Step 910: The distributed apparatus 1 processes the first data by using the machine learning model, to obtain second data.

After receiving the first data, the distributed apparatus 1 may determine, based on the data processing requirement of the apparatus and the quantity of times that the distributed apparatus 2 processes the raw data, a quantity of times that the distributed apparatus 1 processes the first data, to process the first data by using the machine learning model, to obtain the second data.

For example, when indicating, by using the assistance request information, the distributed apparatus 2 to process the raw data 800 times, the distributed apparatus 1 may process the raw data 1000 times based on the data processing requirement of the distributed apparatus 1, and determine that the received first data needs to be further processed 200 times. Therefore, the distributed apparatus 1 continues to process the first data 800 times by using the machine learning model, to obtain the second data.

In the foregoing data processing method 900, after the distributed apparatus 1 sends the first data or the assistance request information to the distributed apparatus 2, the distributed apparatus 2 can assist the distributed apparatus 1 in completing the data processing. However, in some scenarios, for example, when the distributed apparatus 1 has a high data processing requirement or the distributed apparatus 2 has a low data processing capability, it may be difficult for the distributed apparatus 2 to independently assist the distributed apparatus 1 in completing the data processing. Therefore, the distributed apparatus 2 may further send, to another distributed apparatus, the data obtained by the apparatus through processing, so that the another distributed apparatus continues to assist in completing the data processing. Optionally, the distributed apparatus 1 may further request the another distributed apparatus to continue to assist in the processing, which is similar to requesting the distributed apparatus 2 to assist in the processing. Details are not described herein again.

FIG. 10A is a schematic flowchart of a data processing method 1000 according to an embodiment of this application. As shown in FIG. 10A, the data processing method 1000 includes the following steps 1001 to 1007.

Step 1001: A distributed apparatus 1 determines a data processing requirement.

Step 1002: The distributed apparatus 1 processes raw data by using a machine learning model, to obtain first data.

Step 1003: The distributed apparatus 1 sends the first data to a distributed apparatus 2.

In this embodiment, steps 1001 to 1003 are similar to steps 901 to 903. For details, refer to the foregoing steps 901 to 903. Details are not described herein again.

Step 1004: The distributed apparatus 2 processes the first data by using a machine learning model, to obtain second data.

In this embodiment, a data processing capability of the distributed apparatus 2 cannot support the distributed apparatus 2 in assisting the distributed apparatus 1 in completing data processing. For example, it is assumed that the data processing requirement of the distributed apparatus 1 is to gradually process the raw data 1000 times by using the machine learning model, but the distributed apparatus 1 gradually processes the raw data only 200 times. Therefore, the distributed apparatus 1 may indicate that the distributed apparatus 2 gradually processes the first data 800 times. However, the data processing capability of the distributed apparatus 2 is insufficient to support the distributed apparatus 2 in gradually processing the first data 800 times, and the distributed apparatus 2 may be capable of gradually processing the first data only 200 times, to obtain the second data.

In other words, the second data obtained by processing the first data by the distributed apparatus 2 by using the machine learning model still does not meet the data processing requirement of the distributed apparatus 1, that is, the second data is not target data expected to be obtained by the distributed apparatus 1.

Step 1005: The distributed apparatus 2 sends the second data to a distributed apparatus 3.

Because the second data obtained by processing the first data by the distributed apparatus 2 is not the target data expected to be obtained by the distributed apparatus 1, the distributed apparatus 2 may continue to request another distributed apparatus to assist in completing the data processing.

Specifically, the distributed apparatus 2 sends the second data to a distributed apparatus 3, so that the distributed apparatus 3 continues to process the second data, to assist the distributed apparatus 1 in completing the data processing.

Optionally, when sending the second data to the distributed apparatus 3, the distributed apparatus 2 may further send second information to the distributed apparatus 3, where the second information indicates a quantity of times that the second data sent by the distributed apparatus 2 is to be processed. The quantity of times that the second data is to be processed may be obtained through calculation based on a quantity of times that the first data is to be processed and that is indicated in first information and a quantity of times that the distributed apparatus 2 actually processes the first data. Optionally, the sending of the second data and the sending of the second information may be separately performed.

For example, it is assumed that the data processing requirement of the distributed apparatus 1 is to gradually process the raw data 1000 times by using the machine learning model, but the distributed apparatus 1 gradually processes the raw data only 200 times. Therefore, the distributed apparatus 1 indicates, by using the first information, that the quantity of times that the first data is to be processed is 800. After receiving the first data and the first information, the distributed apparatus 2 processes the first data 200 times, to obtain second data. Therefore, the distributed apparatus 2 may send the second data and second information to a distributed apparatus 3, where the second information indicates that a quantity of times that the second data is to be processed is 600 (800-200).

Step 1006: The distributed apparatus 3 to a distributed apparatus N sequentially assist in processing data.

Similarly, after receiving the second data sent by the distributed apparatus 2, the distributed apparatus 3 continues to process the second data. In addition, if a quantity of times that the distributed apparatus 3 processes the second data is still less than the quantity of times that the second data is to be processed, the distributed apparatus 3 continues to send, to a next distributed apparatus of the distributed apparatus 3, data obtained by the distributed apparatus 3 through processing, to indicate that the subsequent distributed apparatus continues to assist in completing data processing, until the distributed apparatus N obtains, through processing, the target data that can meet the data processing requirement of the distributed apparatus 1.

In this embodiment, the distributed apparatus 3 and the distributed apparatus N may be a same distributed apparatus, or may be different distributed apparatuses. In FIG. 10A, the distributed apparatus 3 and the distributed apparatus N are drawn as different distributed apparatuses.

Step 1007: The distributed apparatus N sends the target data to the distributed apparatus 1.

After the target data needed by the distributed apparatus 1 is obtained through processing, because the target data can meet the data processing requirement of the distributed apparatus 1, the distributed apparatus N sends the target data to the distributed apparatus 1, to complete assisting the distributed apparatus 1 in processing the data. In this way, after receiving the target data, the distributed apparatus 1 can execute another data processing task based on the second data, for example, execute a training task of another model based on the target data.

Optionally, the distributed apparatus N may directly send the target data to the distributed apparatus 1; or the distributed apparatus N may send the target data to a previous distributed apparatus (namely, a distributed apparatus N-1 that requests the distributed apparatus N to assist in processing data) of the distributed apparatus N, so that the target data can be sent to the distributed apparatus 1 hop by hop.

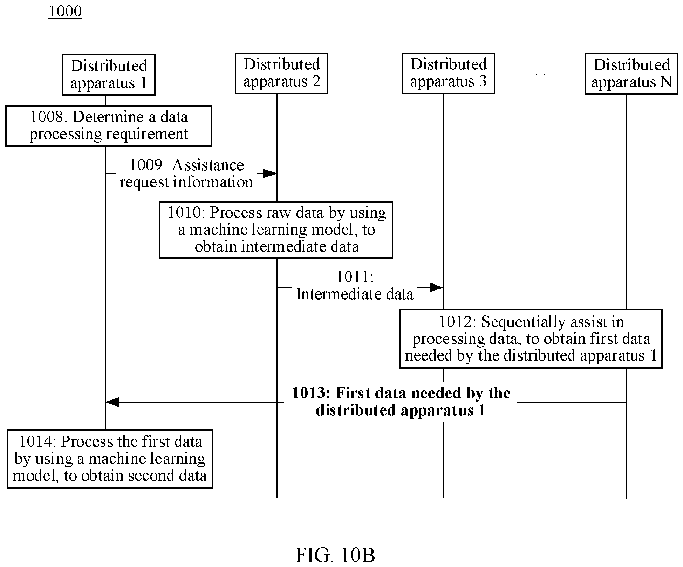

FIG. 10B is another schematic flowchart of a data processing method 1000 according to an embodiment of this application. As shown in FIG. 10B, in another possible embodiment, the data processing method 1000 may include the following steps 1008 to 1014. There is no sequence association between steps 1008 to 1014 and the foregoing steps 1001 to 1007, and steps 1008 to 1014 and the foregoing steps 1001 to 1007 may be two independent sets of steps. A distributed apparatus 1 to a distributed apparatus N may complete joint processing on data by performing the foregoing steps 1001 to 1007. The distributed apparatus 1 to the distributed apparatus N may alternatively complete joint processing on data by performing the foregoing steps 1008 to 1014.

Step 1008: The distributed apparatus 1 determines a data processing requirement.

Step 1009: The distributed apparatus 1 sends assistance request information to a distributed apparatus 2.

In this embodiment, steps 1008 and 1009 are similar to steps 906 and 907. For details, refer to the foregoing steps 906 and 907. Details are not described herein again.

Step 1010: The distributed apparatus 2 processes raw data by using a machine learning model, to obtain intermediate data.

Different from step 908, a data processing capability of the distributed apparatus 2 is insufficient to support the distributed apparatus 2 in completing a quantity of data processing times indicated by the distributed apparatus 1 in the assistance request information. Therefore, the distributed apparatus 2 processes the raw data based on the data processing capability of the apparatus by using the machine learning model, to obtain the intermediate data. A quantity of data processing times corresponding to the intermediate data is less than the quantity of data processing times indicated by the distributed apparatus 1 in the assistance request information.

For example, it is assumed that the distributed apparatus 1 indicates, in the assistance request information, that a quantity of times that the raw data is to be processed is 800, but the data processing capability of the distributed apparatus 2 supports processing the raw data only 300 times. In this case, intermediate data obtained by processing the raw data by the distributed apparatus 300 times by using the machine learning model cannot meet the requirement of the distributed apparatus 1, that is, the intermediate data is not data expected by the distributed apparatus 1.

Step 1011: The distributed apparatus 2 sends the intermediate data to a distributed apparatus 3.

Because the intermediate data obtained by processing the raw data by the distributed apparatus 2 is not data expected to be obtained by the distributed apparatus 1, the distributed apparatus 2 may continue to request another distributed apparatus to assist in completing data processing.

Specifically, the distributed apparatus 2 sends the intermediate data to the distributed apparatus 3, so that the distributed apparatus 3 continues to process the intermediate data, to assist the distributed apparatus 1 in completing data processing.

Optionally, when sending the intermediate data to the distributed apparatus 3, the distributed apparatus 2 may further send indication information to the distributed apparatus 3, where the indication information indicates a quantity of times that the intermediate data sent by the distributed apparatus 2 is to be processed. The quantity of times that the intermediate data is to be processed may be obtained through calculation based on a quantity of times that the raw data is to be processed and that is indicated in assistance request information and a quantity of times that the distributed apparatus 2 actually processes the raw data. Optionally, the sending of the intermediate data and the sending of the indication information may be separately performed.

Step 1012: The distributed apparatus 3 to the distributed apparatus N sequentially assist in processing data, to obtain first data needed by the distributed apparatus 1.

Similarly, after receiving the intermediate data sent by the distributed apparatus 2, the distributed apparatus 3 continues to process the intermediate data. In addition, if a quantity of times that the distributed apparatus 3 processes the intermediate data is still less than the quantity of times that the intermediate data is to be processed, the distributed apparatus 3 continues to send, to a next distributed apparatus of the distributed apparatus 3, data obtained by the distributed apparatus 3 through processing, to indicate that the subsequent distributed apparatus continues to assist in completing data processing, until the distributed apparatus N obtains, through processing, the first data that can meet the data processing requirement of the distributed apparatus 1.

Step 1013: The distributed apparatus N sends the first data to the distributed apparatus 1.

The first data can meet the data processing requirement indicated by the distributed apparatus 1 in the assistance request information. Therefore, the distributed apparatus N sends the first data to the distributed apparatus 1.

Step 1014: The distributed apparatus 1 processes the first data by using a machine learning model, to obtain second data.

A process in which a distributed apparatus requests another distributed apparatus to assist in completing data processing is described in the foregoing method 900 and method 1000. In some scenarios, different distributed apparatuses may need to process data of a same type, and data processing requirements of different distributed apparatuses are different. In this case, a central apparatus may be configured to coordinate the data processing requirements of the distributed apparatuses, so that the different distributed apparatuses perform joint data processing.

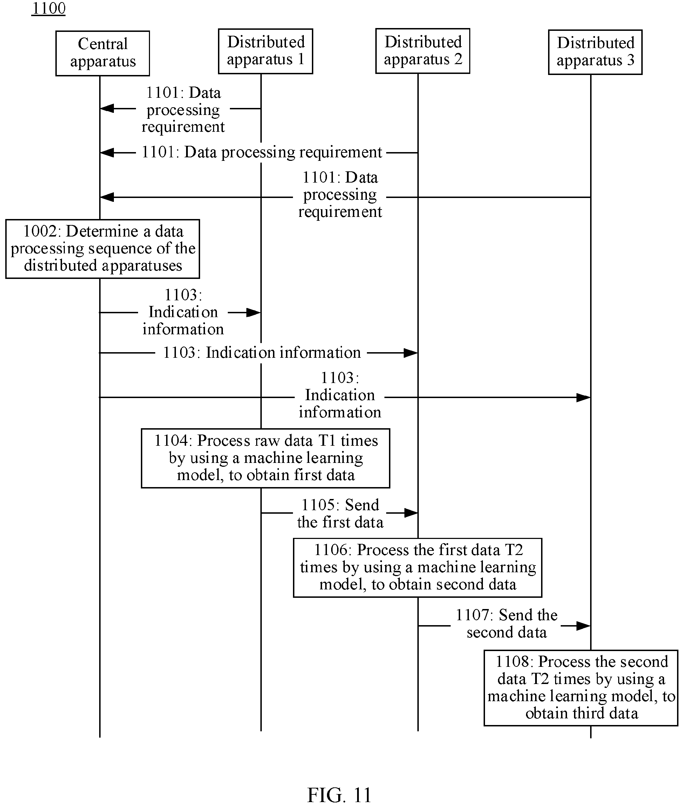

FIG. 11 is a schematic flowchart of a data processing method 1100 according to an embodiment of this application. As shown in FIG. 11, the data processing method 1100 includes the following steps 1101 to 1108.

Step 1101: A plurality of distributed apparatuses respectively send data processing requirements to a central apparatus.

In this embodiment, an example in which there are three distributed apparatuses is used. For example, the plurality of distributed apparatuses include a distributed apparatus 1, a distributed apparatus 2, and a distributed apparatus 3. Data needed by the plurality of distributed apparatuses is a same type of data, but different distributed apparatuses have different quality requirements on the needed data, that is, different distributed apparatuses have different requirements for quantities of times of performing noise reduction processing on raw data.

For example, it is assumed that the data needed by the plurality of distributed apparatuses is image data, and the distributed apparatus 1 needs to train an image classification model by using the image data. The image classification model does not have a high requirement for quality on the image data. Therefore, a data processing requirement of the distributed apparatus 1 may be specifically to perform noise reduction processing on raw image data 1000 times.

The distributed apparatus 2 may need the image data to train a semantic segmentation model. The semantic segmentation model is used to recognize objects in an image. Therefore, the semantic segmentation model has a high requirement for quality on the image data. A data processing requirement of the distributed apparatus 2 may be specifically to perform noise reduction processing on the raw image data 5000 times.

In addition, the distributed apparatus 3 may need the image data to train an image enhancement model. The image enhancement model identifies a specific object in an image and enhances definition of the identified specific object. Therefore, the image enhancement model has a highest requirement for quality on the image data. A data processing requirement of the distributed apparatus 3 may be specifically to perform noise reduction processing on the raw image data 10,000 times.

Step 1102: The central apparatus determines a data processing sequence of the distributed apparatuses.

Because the data processing requirements of the distributed apparatuses are different, the central apparatus may determine the data processing sequence of the distributed apparatuses based on the requirements on the quantities of times that the distributed apparatuses process the data. For example, the central apparatus first determines quantities of data processing times in the data processing requirements of the distributed apparatuses, and then determines the data processing sequence of the distributed apparatuses in ascending order of the quantities of data processing times. A smaller quantity of data processing times in the data processing requirement of the distributed apparatus indicates a higher ranking for the distributed apparatus to process the data; and a larger quantity of data processing times in the data processing requirement of the distributed apparatus indicates a lower ranking for the distributed apparatus to process the data.

For example, assuming that the data processing requirement of the distributed apparatus 1 is to perform noise reduction processing on the raw image data 1000 times, the data processing requirement of the distributed apparatus 2 is to perform noise reduction processing on the raw image data 5000 times, and the data processing requirement of the distributed apparatus 3 is to perform noise reduction processing on the raw image data 10,000 times, a data processing sequence of the three distributed apparatuses is: distributed apparatus 1 → distributed apparatus 2 → distributed apparatus 3.

Step 1103: The central apparatus sends indication information to the distributed apparatuses, to indicate the data processing sequence of the distributed apparatuses.

After determining the data processing sequence of the distributed apparatuses, the central apparatus sends the indication information to the distributed apparatuses, to indicate the data processing sequence of the distributed apparatuses. In this way, after receiving the indication information sent by the central apparatus, each distributed apparatus can determine a specific distributed apparatus from which processed data is received and a specific distributed apparatus to which processed data on the apparatus is sent.

Optionally, when data processing capabilities of the distributed apparatuses are stable, that is, computing resources and storage resources allocated to data processing on the distributed apparatuses are stable, the central apparatus may further indicate, in the indication information sent to the distributed apparatuses, quantities of times that the distributed apparatuses need to process the data.

In a possible example, when the data processing requirements of the distributed apparatus 1, the distributed apparatus 2, and the distributed apparatus 3 are respectively to perform noise reduction processing 1000 times, 5000 times, and 10,000 times on the raw image data, the indication information 1 sent by the central apparatus to the distributed apparatus 1 may be specifically as follows: A previous-hop node is empty, a quantity of local data processing times is 1000, and a next-hop node is the distributed apparatus 2. That is, the distributed apparatus 1 is a 1st node that starts to process the data, and the distributed apparatus 1 needs to process the data 1000 times by using a machine learning model, and send processed data to the distributed apparatus 2. In addition, the indication information 2 sent by the central apparatus to the distributed apparatus 2 may be specifically as follows: A previous-hop node is the distributed apparatus 1, a quantity of local data processing times is 4000 (namely, 5000-1000), and a next-hop node is the distributed apparatus 3. The indication information 3 sent by the central apparatus to the distributed apparatus 3 may be specifically as follows: A previous-hop node is the distributed apparatus 2, a quantity of local data processing times is 5000, and a next-hop node is empty. In this example, all the data processing capabilities of the distributed apparatuses meet the data processing requirements of the apparatuses. Therefore, after receiving, from another distributed apparatus, data that has been processed for a specific quantity of times, any distributed apparatus can continue to process the processed data, to obtain data that meets the data processing requirement of the apparatus.

In some other cases, the data processing capabilities of the distributed apparatuses may not meet the data processing requirements of the distributed apparatuses. If the central apparatus continues to determine, based on a quantity relationship between the data processing times in the data processing requirements of the distributed apparatuses, a manner of jointly processing the data by the distributed apparatuses, some distributed apparatuses may fail to complete the data processing. Therefore, in this example, the central apparatus may determine, based on the quantity relationship between the quantities of data processing times in the data processing requirements of the distributed apparatuses and the data processing capabilities of the distributed apparatuses, the manner of jointly processing the data by the distributed apparatuses.

For example, when the data processing requirements of the distributed apparatus 1, the distributed apparatus 2, and the distributed apparatus 3 are respectively to perform noise reduction processing on the raw image data 1000 times, for 5000 times, and 10,000 times, the data processing capability of the distributed apparatus 1 supports the distributed apparatus 1 in performing noise reduction processing on the data 1000 times, the data processing capability of the distributed apparatus 2 supports the distributed apparatus 2 in performing noise reduction processing on the data 2000 times, and the data processing capability of the distributed apparatus 3 supports the distributed apparatus 3 in performing noise reduction processing on the data 9000 times, the indication information 1 sent by the central apparatus to the distributed apparatus 1 may be specifically as follows: A previous-hop node is empty, a quantity of local data processing times is 1000, and a next-hop node is the distributed apparatus 2; the indication information 2 sent by the central apparatus to the distributed apparatus 2 may be specifically as follows: A previous-hop node is the distributed apparatus 1, a quantity of local data processing times is 2000, and a next-hop node is the distributed apparatus 3; and the previous-hop node is the distributed apparatus 3, the quantity of local data processing times is 0, and the next-hop node is empty; and the indication information 3 sent by the central apparatus to the distributed apparatus 3 may be specifically as follows: A previous-hop node is the distributed apparatus 2, a next-hop node is the distributed apparatus 2 when a quantity of local data processing times is 2000, and the next-hop node is empty when the quantity of local data processing times is 7000.

Step 1104: The distributed apparatus 1 processes the raw data T1 times by using a machine learning model, to obtain first data.

After receiving the indication information sent by the central apparatus, the distributed apparatus 1 may determine that the distributed apparatus 1 is a 1st apparatus for processing the data. Therefore, the distributed apparatus 1 processes the raw data T1 times by using the machine learning model, to obtain the first data.

Optionally, when the data processing capabilities of the distributed apparatuses are stable, the central apparatus may specify, by using the indication information, the quantities of times that the distributed apparatuses process the data. The quantity of times that the distributed apparatus 1 processes the raw data may match the data processing requirement of the distributed apparatus 1. That is, the data processing requirement of the distributed apparatus 1 is to process the raw data T1 times, and the quantity of times that the distributed apparatus 1 actually processes the raw data is also T1.

Optionally, when the data processing capabilities of the distributed apparatuses fluctuate, the central apparatus does not specify the quantities of times that the distributed apparatuses process the data. The quantity of times that the distributed apparatus 1 processes the raw data may not match the data processing requirement of the distributed apparatus 1. That is, the quantity of times that the distributed apparatus 1 actually processes the raw data may be greater than or less than the quantity of data processing times needed by the distributed apparatus 1. For example, the data processing requirement of the distributed apparatus 1 is to process the raw data N1 times, and the quantity of times that the distributed apparatus 1 actually processes the raw data is T1, where N1 may be greater than or less than T1. When the computing resources and the storage resources on the distributed apparatus 1 are sufficient, the quantity T1 of times that the distributed apparatus 1 actually processes the raw data may be greater than the needed quantity N1 of data processing times. When the computing resources or the storage resources on the distributed apparatus 1 are insufficient, the quantity T1 of times that the distributed apparatus 1 actually processes the raw data may be less than the needed quantity N1 of data processing times.

Step 1105: The distributed apparatus 1 sends the first data to the distributed apparatus 2.

In this embodiment, the indication information received by the distributed apparatus 1 from the central apparatus further indicates that the distributed apparatus 1 needs to send the processed data to the distributed apparatus 2. Therefore, after processing the raw data and obtaining the first data, the distributed apparatus 1 sends the first data to the distributed apparatus 2.

Optionally, when the central apparatus does not indicate the quantities of times that the distributed apparatuses need to process the data, the distributed apparatus 1 may send information to the distributed apparatus 2, to indicate a quantity of times that the distributed apparatus 1 has processed the raw data.

Step 1106: The distributed apparatus 2 processes the first data T2 times by using a machine learning model, to obtain second data.

After receiving the indication information sent by the central apparatus, the distributed apparatus 2 may determine that the distributed apparatus 2 needs to receive the data from the distributed apparatus 1, and continues to process the received data. Therefore, the distributed apparatus 2 processes the received first data T2 times by using the machine learning model, to obtain the second data. When the second data obtained by the distributed apparatus 2 by processing the first data T2 times can meet the data processing requirement of the distributed apparatus 2, the second data is data needed by the distributed apparatus 2.

Optionally, when the data processing capabilities of the distributed apparatuses are stable, the central apparatus may specify, by using the indication information, the quantity of times that the distributed apparatus 2 processes the data. After processing the first data T2 times based on the indication of the central apparatus, the distributed apparatus 2 may obtain the data needed by the distributed apparatus 2. For example, it is assumed that the data processing requirement of the distributed apparatus 2 is to process the raw data T1+T2 times. Because the first data received by the distributed apparatus 2 is data obtained by processing the raw data T1 times, the second data obtained by processing the first data by the distributed apparatus 2 T2 times based on the indication of the central apparatus is the data needed by the distributed apparatus 2.

Optionally, when the data processing capabilities of the distributed apparatuses fluctuate, the quantity of times that the distributed apparatus 2 processes the first data may be determined based on the data processing quantity corresponding to the first data and the data processing requirement of the distributed apparatus 2. For example, when the distributed apparatus 1 indicates to the distributed apparatus 2 that the quantity of times that the distributed apparatus 1 actually processes the raw data is T1, the distributed apparatus 2 may determine, based on the data processing requirement that the distributed apparatus 2 processes the raw data N2 times, that the quantity of times that the distributed apparatus 2 needs to process the first data is N2-T1=T2.

Optionally, when the data processing capability of the distributed apparatus 2 supports the distributed apparatus 2 in processing the first data only S1 times (S1<T2), that is, the distributed apparatus 2 does not support processing the first data T2 times, the distributed apparatus 2 may process the first data S1 times, to obtain second data. The second data is not the data needed by the distributed apparatus 2, and the distributed apparatus 2 may send the second data to another distributed apparatus, to request the another distributed apparatus to assist the distributed apparatus 2 in continuing to process the second data.

Alternatively, when the data processing capability of the distributed apparatus 2 supports the distributed apparatus 2 in processing the first data S2 times (S2>T2), that is, a quantity of times, supported by the distributed apparatus 2, of processing the first data is greater than T2, the distributed apparatus 2 may process the first data S2 times, to obtain the second data. In a process in which the distributed apparatus 2 may process the first data S2 times, the data obtained by the distributed apparatus 2 by processing the first data T2 times is the data needed by the distributed apparatus 2.

Step 1107: The distributed apparatus 2 sends the second data to the distributed apparatus 3.

In this embodiment, the indication information received by the distributed apparatus 2 from the central apparatus further indicates that the distributed apparatus 2 needs to send the processed data to the distributed apparatus 3.

Therefore, after processing the first data and obtaining the second data, the distributed apparatus 2 sends the second data to the distributed apparatus 3.

Step 1108: The distributed apparatus 3 processes the second data T3 times by using a machine learning model, to obtain third data.

After receiving the indication information sent by the central apparatus, the distributed apparatus 3 may determine that the distributed apparatus 3 needs to receive the data from the distributed apparatus 2, and continues to process the received data. Therefore, the distributed apparatus 3 processes the second data T3 times by using the machine learning model, to obtain the third data. When the third data obtained by the distributed apparatus 3 by processing the first data T3 times can meet the data processing requirement of the distributed apparatus 3, the third data is data needed by the distributed apparatus 3.

A process in which the distributed apparatus 3 processes the second data in various cases is similar to the process in which the distributed apparatus 2 processes the first data. For details, refer to the process in which the distributed apparatus 2 processes the first data in step 1106. Details are not described herein again.

It may be understood that the foregoing method 1100 is described by using an example in which the three distributed apparatuses jointly process the data. During actual application, two or more distributed apparatuses may jointly process the data based on the foregoing procedure. A quantity of distributed apparatuses that jointly process the data is not limited in this embodiment.

In addition, how to coordinate the distributed apparatuses to jointly process the data when the data processing requirements of the distributed apparatuses are different is described in the foregoing method 1100. In some special scenarios, some distributed apparatuses may have a same data processing requirement, and the central apparatus may allocate a data processing task to the distributed apparatuses based on data processing capabilities of the distributed apparatuses.

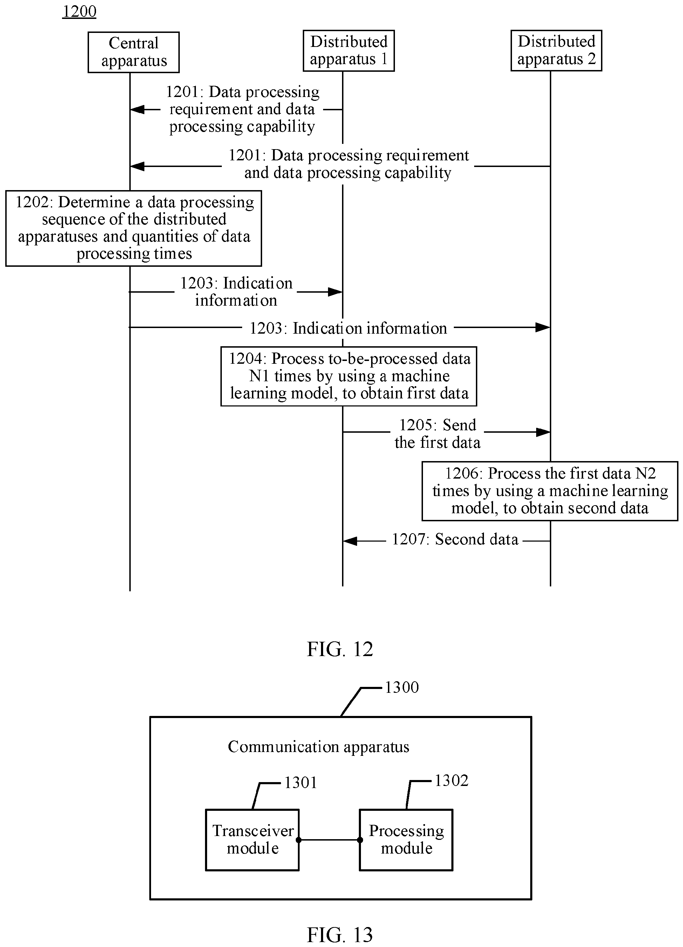

FIG. 12 is a schematic flowchart of a data processing method 1200 according to an embodiment of this application. As shown in FIG. 12, the data processing method 1200 includes the following steps 1201 to 1207.

Step 1201: A distributed apparatus 1 and a distributed apparatus 2 respectively send data processing requirements and data processing capabilities to a central apparatus.

In this embodiment, the data processing requirements of the distributed apparatus 1 and the distributed apparatus 2 are the same. For example, the data processing requirements of the distributed apparatus 1 and the distributed apparatus 2 are both to perform noise reduction processing on raw data 1000 times.

In addition, a data processing capability of the distributed apparatus 1 may be the same as or different from a data processing capability of the distributed apparatus 2. This is not specifically limited in this embodiment.

Step 1202: The central apparatus determines a data process sequence of the distributed apparatuses and quantities of data processing times.

In this embodiment, the data processing requirements of the distributed apparatus 1 and the distributed apparatus 2 are the same, indicating that data needed by the distributed apparatus 1 is the same as data needed by the distributed apparatus 2. Therefore, the central apparatus may allocate a part of a data processing procedure to the distributed apparatus 1, and allocate another part of the data processing procedure to the distributed apparatus 2.

Optionally, there may be a plurality of manners in which the central apparatus may determine the data processing sequence of the distributed apparatuses. For example, the central apparatus may randomly determine the data processing sequence of the distributed apparatus 1 and the distributed apparatus 2. Alternatively, the central apparatus may determine the data processing sequence of the distributed apparatus 1 and the distributed apparatus 2 based on sources of the data that needs to be processed by the distributed apparatus 1 and the distributed apparatus 2. For example, assuming that the data that needs to be processed by the distributed apparatus 1 and the distributed apparatus 2 comes from a distributed apparatus 0, and the distributed apparatus 1 is located between the distributed apparatus 0 and the distributed apparatus 2, the central apparatus may determine that the distributed apparatus 1 first processes the data, and the distributed apparatus 2 then continues to process data obtained by the distributed apparatus 1 through processing. Alternatively, the central apparatus may determine the data processing sequence of the distributed apparatus 1 and the distributed apparatus 2 based on a next-hop node of data obtained by the distributed apparatus 1 and the distributed apparatus 2 through processing. For example, assuming that the data finally obtained by the distributed apparatus 1 and the distributed apparatus 2 needs to be sent to a distributed apparatus 3, and the distributed apparatus 1 is located between the distributed apparatus 2 and the distributed apparatus 3, the central apparatus may determine that the distributed apparatus 2 first processes the data, and the distributed apparatus 1 then continues to process data obtained by the distributed apparatus 2 through processing, so that the distributed apparatus 1 can send the finally obtained data to the distributed apparatus 3 at a faster speed.

Optionally, the quantities of times that the distributed apparatuses process the data may be determined by the central apparatus based on the data processing capabilities of the distributed apparatuses. A higher data processing capability of the distributed apparatus indicates a larger quantity of times that the distributed apparatus processes the data and that may be determined by the central apparatus; and a lower data processing capability of the distributed apparatus indicates a smaller quantity of times that the distributed apparatus processes the data and that may be determined by the central apparatus.

Step 1203: The central apparatus sends indication information to the distributed apparatuses, to indicate the data processing sequence of the distributed apparatuses and the quantities of times.

For example, when the data processing capability of the distributed apparatus 1 is low and the data processing capability of the distributed apparatus 2 is high, the central apparatus may send indication information 1 to the distributed apparatus 1, to indicate the distributed apparatus 1 to first process the data 200 times and send data obtained through processing to the distributed apparatus 2. In addition, the central apparatus further sends indication information 2 to the distributed apparatus 2, to indicate the distributed apparatus 2 to receive the data from the distributed apparatus 1, process the received data 800 times, and send, to the distributed apparatus 1, data obtained through processing.

Step 1204: The distributed apparatus 1 processes to-be-processed data N1 times by using a machine learning model, to obtain first data.

Based on the indication of the central apparatus, the distributed apparatus 1 processes the to-be-processed data N1 times by using the machine learning model. The to-be-processed data may be raw data pre-stored in the distributed apparatus 1. The to-be-processed data may alternatively be processed data that is sent by another distributed apparatus to the distributed apparatus 1. The to-be-processed data is not specifically limited in this embodiment.

Step 1205: The distributed apparatus 1 sends the first data to the distributed apparatus 2.

Step 1206: The distributed apparatus 2 processes the first data N2 times by using a machine learning model, to obtain second data.

In this embodiment, the data processing requirements of the distributed apparatus 1 and the distributed apparatus 2 are to process the to-be-processed data N1+N2 times. Therefore, after the distributed apparatus 2 processes the first data N2 times, the obtained second data is the data needed by the distributed apparatus 1 and the distributed apparatus 2. In this case, the distributed apparatus 2 may use the obtained second data to execute another task, for example, use the second data to train an image processing model.

Step 1207: The distributed apparatus 2 sends the second data to the distributed apparatus 1.

Because the central apparatus indicates that the distributed apparatus 2 needs to send the processed data to the distributed apparatus 1, the distributed apparatus 2 sends the second data to the distributed apparatus 1 after the distributed apparatus 2 obtains the second data, so that the distributed apparatus 1 executes another task based on the second data.

To implement the foregoing method embodiments, this application further provides a communication apparatus. Refer to FIG. 13. An embodiment of this application provides a communication apparatus 1300. The communication apparatus 1300 can implement a function of the terminal device (or the network device) in the foregoing method embodiments, and therefore can also achieve beneficial effects of the foregoing method embodiments. In this embodiment of this application, the communication apparatus 1300 may be the terminal device (or the network device), or may be an integrated circuit, an element, or the like inside the terminal device (or the network device), for example, a chip. In the following embodiments, an example in which the communication apparatus 1300 is the terminal device or the network device is used for description.

In a possible embodiment, the communication apparatus 1300 includes a transceiver module 1301 and a processing module 1302.

The transceiver module 1301 is configured to receive first data from a second apparatus, where the first data is data processed by using a first machine learning model. The processing module 1302 is configured to process the first data by using a second machine learning model, to obtain second data, where a structure of the first machine learning model is the same as a structure of the second machine learning model, and the communication apparatus and the second apparatus are configured to jointly perform data processing.

In a possible implementation, the second machine learning model is a diffusion transformer, and the second machine learning model is used to perform noise reduction processing on the first data.

In a possible implementation, the transceiver module 1301 is further configured to receive first information from the second apparatus, where the first information is for requesting the communication apparatus to process the first data.

In a possible implementation, the first information indicates that a quantity of times that the first data is to be processed is a first quantity of times. The processing module 1302 is further configured to process the first data the first quantity of times by using the second machine learning model, to obtain the second data, where a capability of the first apparatus supports completion of the processing performed on the first data the first quantity of times.

In a possible implementation, the transceiver module 1301 is further configured to send the second data to the second apparatus. Alternatively, the transceiver module 1301 is configured to send the second data to a source apparatus, where the first information further indicates information about the source apparatus, and the source apparatus is a 1st apparatus for requesting assistance in data processing.

In a possible implementation, the first information indicates that a quantity of times that the first data is to be processed is a first quantity of times. The processing module 1302 is further configured to process the first data a second quantity of times by using the second machine learning model, to obtain the second data, where the first quantity of times is greater than the second quantity of times, and a capability of the first apparatus does not support completion of the processing performed on the first data the first quantity of times. The transceiver module 1301 is further configured to send the second data and second information to a third apparatus. The second information indicates that a quantity of times that the second data is to be processed is a third quantity of times, the third quantity of times is a difference between the first quantity of times and the second quantity of times, and the third apparatus is configured to assist the communication apparatus in processing data.

In a possible implementation, the transceiver module 1301 is further configured to send assistance request information to the second apparatus, where the assistance request information is for requesting the second apparatus to assist in processing data.

In a possible implementation, the transceiver module 1301 is further configured to send third information to the central apparatus, where the third information indicates a quantity of processing times of data needed by the communication apparatus. The transceiver module 1301 is further configured to receive feedback information from the central apparatus, where the feedback information indicates that the second apparatus is an assisting node.

In a possible implementation, the transceiver module 1301 is further configured to receive fourth information from the central apparatus, where the fourth information indicates a quantity of times that the communication apparatus needs to process data received from the second apparatus. The processing module 1302 is further configured to process the first data based on the fourth information by using the second machine learning model, to obtain the second data needed by the communication apparatus.

In a possible implementation, the fourth information further indicates information about a third apparatus, and the third apparatus is an apparatus that is to receive processed data. The transceiver module 1301 is further configured to send the second data to the third apparatus based on the fourth information.

In a possible implementation, the transceiver module 1301 is further configured to receive fifth information from the second apparatus, where the fifth information indicates a quantity of processed times corresponding to the first data. The processing module 1302 is further configured to process, by using the second machine learning model, the first data based on the quantity of processing times and the quantity of processing times of the data needed by the communication apparatus, to obtain the second data needed by the communication apparatus.

In another possible embodiment, the processing module 1302 is configured to process raw data by using a first machine learning model, to obtain first data. The transceiver module 1301 is configured to send the first data to a second apparatus, to request the second apparatus to assist in processing the first data. The transceiver module 1301 is configured to receive second data sent by the second apparatus or another apparatus, where the second data is obtained by processing the first data, the second data is obtained through processing based on a second machine learning model, and a structure of the first machine learning model is the same as a structure of the second machine learning model.

In a possible implementation, the first machine learning model is a diffusion transformer, and the first machine learning model is used to perform noise reduction processing on the raw data.

In a possible implementation, the transceiver module is further configured to send first information to the second apparatus, where the first information is for requesting the second apparatus to process the first data, and the first information further indicates a quantity of times that the first data is to be processed, and the quantity of times that the first data is to be processed is determined based on a quantity of times that the raw data needs to be processed and a quantity of times that the first apparatus processes the raw data.

In another possible embodiment, the transceiver module 1301 is configured to receive first information from a first apparatus and second information from a second apparatus, where the first information indicates a first quantity of processing times of data needed by the first apparatus, the second information indicates a second quantity of processing times of data needed by the second apparatus, and a data processing model corresponding to the first quantity of processing times is the same as a data processing model corresponding to the second quantity of processing times. The transceiver module 1301 is further configured to send third information to the second apparatus, where the third information indicates the second apparatus to send processed data to the first apparatus, and the second quantity of processing times of the data needed by the second apparatus is less than or equal to the first quantity of processing times of the data needed by the first apparatus.

In a possible implementation, the transceiver module 1301 is further configured to send fourth information to the first apparatus, where the fourth information indicates a quantity of times that the first apparatus needs to process data received from the second apparatus.

Optionally, when the communication apparatus 1300 is the terminal device or the network device, the transceiver module 1301 in the communication apparatus 1300 may be a transceiver, and the processing module 1302 may be a processor. When the communication apparatus 1300 is the integrated circuit, the element, or the like inside the terminal device or the network device, for example, the communication apparatus 1300 is the chip, the transceiver module 1301 in the communication apparatus 1300 may be an output pin or an input pin on the chip, and the processing module 1302 may be an operation component on the chip. For another example, when the communication apparatus 1300 is a chip system, the transceiver module 1301 in the communication apparatus 1300 may be a communication interface on the chip system, and the processing module 1302 may be a processing core on the chip system.

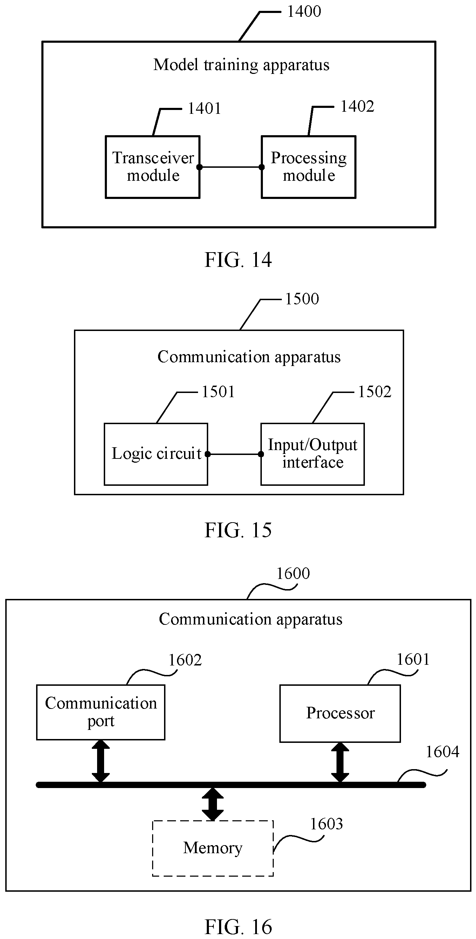

Refer to FIG. 14. An embodiment of this application provides a model training apparatus 1400. The model training apparatus 1400 can implement a function of the terminal device (or the network device) in the foregoing method embodiments, and therefore can also achieve beneficial effects of the foregoing method embodiments. In this embodiment of this application, the model training apparatus 1400 may be the terminal device (or the network device), or may be an integrated circuit, an element, or the like inside the terminal device (or the network device), for example, a chip. In the following embodiments, an example in which the model training apparatus 1400 is the terminal device or the network device is used for description.

As shown in FIG. 14, the model training apparatus 1400 includes a transceiver module 1401 and a processing module 1402. The transceiver module 1401 is configured to obtain a training sample set, where the training sample set includes first data and second data, the first data is obtained based on the second data, and the second data is a training label of the first data. The processing module 1402 is configured to train a first machine learning model based on the training sample set, to obtain a trained first machine learning model, where the first machine learning model is used to process the first data. The transceiver module 1401 is configured to send the trained first machine learning model to a second apparatus, where the second apparatus is an apparatus configured to aggregate machine learning models that are obtained by a plurality of apparatuses through training and that have a same structure and different parameters.

In a possible implementation, the transceiver module 1401 is further configured to send first information to a third apparatus, where the first information indicates a capability that is related to model training and that is on the model training apparatus, and the third apparatus is configured to determine, based on capabilities of the plurality of apparatuses participating in training the machine learning models, training content for which the plurality of apparatuses are responsible. The transceiver module 1401 is further configured to receive second information from the third apparatus, where the second information indicates a quantity of times that the first machine learning model trained on the model training apparatus processes input data, and the second information further indicates a requirement on the input data of the first machine learning model. The processing module 1402 is further configured to: process raw data based on the requirement on the input data and the quantity of times that the first machine learning model processes the input data that are indicated by the second information, to obtain the second data; and process the second data based on the quantity of times that the first machine learning model processes the input data and that is indicated by the second information, to obtain the first data.

In a possible implementation, the transceiver module 1401 is further configured to receive a second machine learning model from the second apparatus. The processing module 1402 is further configured to train the second machine learning model based on the training sample set, to obtain a trained second machine learning model. The transceiver module 1401 is further configured to send the trained second machine learning model to the second apparatus.

In another possible embodiment, the transceiver module 1401 is configured to receive a plurality of pieces of capability information, where the plurality of pieces of capability information are from a plurality of different apparatuses, and each of the plurality of pieces of capability information indicates a capability that is related to model training and that is on an apparatus. A sending module 1403 is configured to separately send different training configuration information to a plurality of different apparatuses based on a plurality of pieces of capability information, where the training configuration information indicates a quantity of times that a machine learning model trained on the apparatus processes input data, the training configuration information further indicates a requirement on input data of the machine learning model trained on the apparatus, and the machine learning models trained by the plurality of different apparatuses are models with a same structure.

Optionally, when the model training apparatus 1400 is the terminal device or the network device, the transceiver module 1401 in the model training apparatus 1400 may be a transceiver, and the processing module 1402 may be a processor. When the model training apparatus 1400 is the integrated circuit, the element, or the like inside the terminal device or the network device, for example, the model training apparatus 1400 is the chip, the transceiver module 1401 in the model training apparatus 1400 may be an output pin or an input pin on the chip, and the processing module 1402 may be an operation component on the chip. For another example, when the model training apparatus 1400 is a chip system, the transceiver module 1401 in the model training apparatus 1400 may be a communication interface on the chip system, and the processing module 1402 may be a processing core on the chip system.

FIG. 15 is a diagram of another structure of a communication apparatus 1500 according to this application. The communication apparatus 1500 includes at least an input/output interface 1502. The communication apparatus 1500 may be a chip or an integrated circuit.

Optionally, the communication apparatus further includes a logic circuit 1501.

The transceiver module 1301 shown in FIG. 13 may be a communication interface. The communication interface may be the input/output interface 1502 in FIG. 15. The input/output interface 1502 may include an input interface and an output interface. Alternatively, the communication interface may be a transceiver circuit, and the transceiver circuit may include an input interface circuit and an output interface circuit.

Optionally, the input/output interface 1502 is configured to obtain AI model information of a first network device. The logic circuit 1501 is configured to determine AI performance information of the first network device based on the AI model information of the first network device. The logic circuit 1501 and the input/output interface 1502 may further perform other steps performed by the terminal device in any one of the foregoing embodiments, and achieve corresponding beneficial effects. Details are not described herein again.

Optionally, the logic circuit 1501 is configured to generate AI model information of a first network device. The input/output interface 1502 is configured to send the AI model information of the first network device. The logic circuit 1501 and the input/output interface 1502 may further perform other steps performed by the network device in any one of the embodiments, and achieve corresponding beneficial effects. Details are not described herein again.

In a possible implementation, the processing module 1302 shown in FIG. 13 may be the logic circuit 1501 in FIG. 15.

Optionally, the logic circuit 1501 may be a processing apparatus, and some or all functions of the processing apparatus may be implemented by using software. Some or all functions of the processing apparatus may be implemented by using software.

Optionally, the processing apparatus may include a memory and a processor. The memory is configured to store a computer program. The processor reads and executes the computer program stored in the memory, to perform corresponding processing and/or steps in any one of the method embodiments.

Optionally, the processing apparatus may include only a processor. The memory configured to store the computer program is located outside the processing apparatus, and the processor is connected to the memory through a circuit/wire, to read and execute the computer program stored in the memory. The memory and the processor may be integrated together, or may be physically independent of each other.

Optionally, the processing apparatus may be one or more chips or one or more integrated circuits. For example, the processing apparatus may be one or more field-programmable gate arrays (field-programmable gate array, FPGA), application-specific integrated circuits (application-specific integrated circuit, ASIC), system on chips (system on chip, SoC), central processing units (central processor unit, CPU), network processors (network processor, NP), digital signal processors (digital signal processor, DSP), micro controller units (micro controller unit, MCU), programmable logic devices (programmable logic device, PLD) or other integrated chips, or any combination of the foregoing chips or processors.

FIG. 16 shows a communication apparatus 1600 involved in the foregoing embodiments according to an embodiment of this application. The communication apparatus 1600 may be specifically a communication apparatus used as the terminal device in the foregoing embodiments. In an example shown in FIG. 16, the terminal device is implemented by using a terminal device (or a component in the terminal device).

In the diagram of a possible logical structure of the communication apparatus 1600, the communication apparatus 1600 may include but is not limited to at least one processor 1601 and a communication port 1602.

Further, optionally, the apparatus may further include at least one of a memory 1603 and a bus 1604. In this embodiment of this application, the at least one processor 1601 is configured to control actions of the communication apparatus 1600.

In addition, the processor 1601 may be a central processing unit, a general-purpose processor, a digital signal processor, an application-specific integrated circuit, a field-programmable gate array or another programmable logic device, a transistor logic device, a hardware component, or any combination thereof. The processor may implement or execute various example logical blocks, modules, and circuits described with reference to content disclosed in this application. Alternatively, the processor may be a combination of processors implementing a computing function, for example, a combination of one or more microprocessors, or a combination of a digital signal processor and a microprocessor. It may be clearly understood by a person skilled in the art that, for the purpose of convenient and brief description, for detailed working processes of the foregoing system, apparatus, and unit, refer to corresponding processes in the foregoing method embodiments. Details are not described herein again.

It should be noted that the communication apparatus 1600 shown in FIG. 16 may be specifically configured to implement steps implemented by the terminal device in the foregoing method embodiments, and achieves technical effects corresponding to these achieved by the terminal device. For specific implementations of the communication apparatus shown in FIG. 16, refer to descriptions in the foregoing method embodiments. Details are not described herein again.

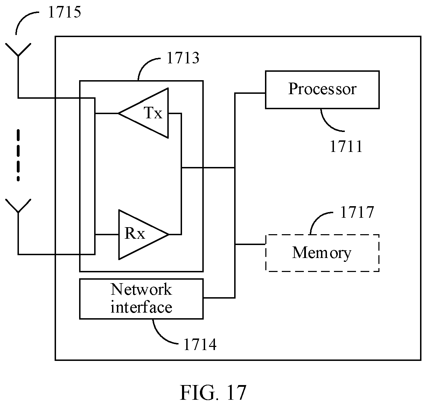

FIG. 17 is a diagram of a structure of a communication apparatus 1700 involved in the foregoing embodiments according to an embodiment of this application. The communication apparatus 1700 may be specifically a communication apparatus used as the network device in the foregoing embodiments. In an example shown in FIG. 17, the network device is implemented by using a network device (or a component in the network device). For a structure of the communication apparatus, refer to the structure shown in FIG. 17.

The communication apparatus 1700 includes at least one processor 1711 and at least one network interface 1714. Further, optionally, the communication apparatus further includes at least one memory 1717, at least one transceiver 1713, and one or more antennas 1715. The processor 1711, the memory 1717, the transceiver 1713, and the network interface 1714 are connected, for example, are connected by using a bus. In this embodiment of this application, the connection may include various interfaces, transmission lines, buses, or the like. This is not limited in this embodiment. The antenna 1715 is connected to the transceiver 1713. The network interface 1714 is used by the communication apparatus to communicate with another communication device over a communication link. For example, the network interface 1714 may include a network interface between the communication apparatus and a core network device, for example, an S1 interface. The network interface may include a network interface between the communication apparatus and another communication apparatus (for example, another network device or the core network device), for example, an X2 interface or an Xn interface.

The processor 1711 is mainly configured to: process a communication protocol and communication data, control the entire communication apparatus, execute a software program, and process data of the software program, for example, is configured to support the communication apparatus in performing actions described in the embodiments. The communication apparatus may include a baseband processor and a central processing unit. The baseband processor is mainly configured to process the communication protocol and the communication data. The central processing unit is mainly configured to: control an entire terminal device, execute the software program, and process the data of the software program. The processor 1711 in FIG. 17 may integrate functions of the baseband processor and the central processing unit. A person skilled in the art may understand that the baseband processor and the central processing unit may alternatively be independent processors, and are interconnected by using a technology such as the bus. A person skilled in the art may understand that the terminal device may include a plurality of baseband processors to adapt to different network standards, the terminal device may include a plurality of central processing units to improve a processing capability of the terminal device, and components of the terminal device may be connected by using various buses. The baseband processor may also be expressed as a baseband processing circuit or a baseband processing chip. The central processing unit may also be expressed as a central processing circuit or a central processing chip. A function of processing the communication protocol and the communication data may be built in the processor, or may be stored in the memory in a form of a software program. The processor executes the software program to implement a baseband processing function.

The memory is mainly configured to store the software program and the data. The memory 1717 may exist independently, and is connected to the processor 1711. Optionally, the memory 1717 may be integrated with the processor 1711, for example, integrated on a chip. The memory 1717 can store program code for performing the technical solutions in embodiments of this application, and the processor 1711 controls execution. Various types of executed computer program code may also be considered as drivers of the processor 1711.

FIG. 17 shows only one memory and one processor. The actual terminal device may have a plurality of processors and a plurality of memories. The memory may also be referred to as a storage medium, a storage device, or the like. The memory may be a storage element on a same chip as the processor, that is, an on-chip storage element, or may be an independent storage element. This is not limited in this embodiment of this application.

The transceiver 1713 may be configured to support receiving or sending of a radio frequency signal between the communication apparatus and the terminal, and the transceiver 1713 may be connected to the antenna 1715. The transceiver 1713 includes a transmitter Tx and a receiver Rx. Specifically, the one or more antennas 1715 may receive the radio frequency signal. The receiver Rx in the transceiver 1713 is configured to: receive the radio frequency signal from the antenna, convert the radio frequency signal into a digital baseband signal or a digital intermediate frequency signal, and provide the digital baseband signal or the digital intermediate frequency signal for the processor 1711, so that the processor 1711 further processes the digital baseband signal or the digital intermediate frequency signal, for example, performs demodulation processing and decoding processing. In addition, the transmitter Tx in the transceiver 1713 is further configured to receive a modulated digital baseband signal or digital intermediate frequency signal from the processor 1711, convert the modulated digital baseband signal or digital intermediate frequency signal into a radio frequency signal, and send the radio frequency signal through the one or more antennas 1715. Specifically, the receiver Rx may selectively perform one-level or multi-level down frequency mixing and analog-to-digital conversion on the radio frequency signal to obtain the digital baseband signal or the digital intermediate frequency signal. A sequence of the down frequency mixing and the analog-to-digital conversion is adjustable. The transmitter Tx may selectively perform one-level or multi-level up frequency mixing and digital-to-analog conversion on the modulated digital baseband signal or digital intermediate frequency signal, to obtain the radio frequency signal. A sequence of the up frequency mixing and the digital-to-analog conversion is adjustable. The digital baseband signal and the digital intermediate frequency signal may be collectively referred to as a digital signal.

The transceiver 1713 may also be referred to as a transceiver unit, a transceiver device, a transceiver apparatus, or the like. Optionally, a device configured to implement a receiving function in the transceiver unit may be considered as a receiving unit, and a device configured to implement a sending function in the transceiver unit may be considered as a sending unit. In other words, the transceiver unit includes a receiving unit and a sending unit. The receiving unit may also be referred to as a receiver, an input port, a receiver circuit, or the like. The sending unit may be referred to as a transmitter, a transmitter device, a transmitter circuit, or the like.

It should be noted that the communication apparatus 1700 shown in FIG. 17 may be specifically configured to implement steps implemented by the network device in the foregoing method embodiments, and achieves technical effects corresponding to these achieved by the network device. For specific implementations of the communication apparatus 1700 shown in FIG. 17, refer to descriptions in the foregoing method embodiments. Details are not described herein again.

An embodiment of this application further provides a computer-readable storage medium storing one or more computer-executable instructions. When the computer-executable instructions are executed by a processor, the processor performs the method in the possible implementations of the terminal device in the foregoing embodiments.

An embodiment of this application further provides a computer-readable storage medium storing one or more computer-executable instructions. When the computer-executable instructions are executed by a processor, the processor performs the method in the possible implementations of the network device in the foregoing embodiments.

An embodiment of this application further provides a computer program product (or referred to as a computer program) storing one or more computers. When the computer program product is executed by a processor, the processor performs the method in the possible implementations of the foregoing terminal device.

An embodiment of this application further provides a computer program product storing one or more computers. When the computer program product is executed by a processor, the processor performs the method in the possible implementations of the foregoing network device.

An embodiment of this application further provides a chip system. The chip system includes at least one processor, configured to support a communication apparatus in implementing a function in the possible implementations of the foregoing communication apparatus. Optionally, the chip system further includes an interface circuit, and the interface circuit provides program instructions and/or data for the at least one processor. In a possible design, the chip system may further include a memory. The memory is configured to store program instructions and data that are necessary for the communication apparatus. The chip system may include a chip, or may include the chip and another discrete device. The communication apparatus may be specifically the terminal device in the foregoing method embodiments.

An embodiment of this application further provides a chip system. The chip system includes at least one processor, configured to support a communication apparatus in implementing a function in the possible implementations of the foregoing communication apparatus. Optionally, the chip system further includes an interface circuit, and the interface circuit provides program instructions and/or data for the at least one processor. In a possible design, the chip system may further include a memory. The memory is configured to store program instructions and data that are necessary for the communication apparatus. The chip system may include a chip, or may include the chip and another discrete device. The communication apparatus may be specifically the network device in the foregoing method embodiments.

An embodiment of this application further provides a communication system. An architecture of the network system includes the terminal device and the network device in any one of the foregoing embodiments.

In the several embodiments provided in this application, it should be understood that the disclosed systems, apparatuses, and methods may be implemented in other manners. For example, the described apparatus embodiments are merely examples. For example, unit division is merely logical function division and may be other division during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate components may or may not be physically separate, and components displayed as units may or may not be physical units, in other words, may be located in one position, or may be distributed on a plurality of network units. Some or all of the units may be selected based on an actual requirement to achieve the objectives of the solutions in the embodiments.

In addition, functional units in embodiments of this application may be integrated into one processing unit, each of the units may exist alone physically, or two or more units may be integrated into one unit. The integrated unit may be implemented in a form of hardware, or may be implemented in a form of a software functional unit. When the integrated unit is implemented in the form of the software functional unit and sold or used as an independent product, the integrated unit may be stored in a computer-readable storage medium. Based on such an understanding, the technical solutions of this application essentially, or the part contributing to the conventional technology, or all or some of the technical solutions may be implemented in a form of a software product. The computer software product is stored in a storage medium and includes several instructions for instructing a computer device (which may be a personal computer, a server, a network device, or the like) to perform all or some of the steps of the method in embodiments of this application. The storage medium includes any medium that can store program code, such as a USB flash drive, a removable hard disk, a read-only memory (ROM, Read-Only Memory), a random access memory (RAM, Random Access Memory), a magnetic disk, or an optical disc.

**Claims**

1.  A data processing method, comprising:

    receiving, by a first apparatus, first data from a second apparatus, wherein the first data is data processed by using a first machine learning model; and
    processing, by the first apparatus, the first data by using a second machine learning model, to obtain second data, wherein a structure of the first machine learning model is the same as a structure of the second machine learning model, and the first apparatus and the second apparatus are configured to jointly perform data processing.

2.  The method according to claim 1, wherein the second machine learning model is a diffusion transformer, and the second machine learning model is used to perform noise reduction processing on the first data.

3.  The method according to claim 1 or 2, wherein the method further comprises:
    receiving, by the first apparatus, first information from the second apparatus, wherein the first information is for requesting the first apparatus to process the first data.

4.  The method according to claim 3, wherein the first information indicates that a quantity of times that the first data is to be processed is a first quantity of times; and
    the processing, by the first apparatus, the first data by using a second machine learning model, to obtain second data comprises:
    processing, by the first apparatus, the first data the first quantity of times by using the second machine learning model, to obtain the second data, wherein a capability of the first apparatus supports completion of the processing performed on the first data the first quantity of times.

5.  The method according to claim 4, wherein the method further comprises:

    sending, by the first apparatus, the second data to the second apparatus; or
    sending, by the first apparatus, the second data to a source apparatus, wherein the first information further indicates information about the source apparatus, and the source apparatus is a 1st apparatus for requesting assistance in data processing.

6.  The method according to claim 3, wherein the first information indicates that a quantity of times that the first data is to be processed is a first quantity of times;
    the processing, by the first apparatus, the first data by using a second machine learning model, to obtain second data comprises:

    processing, by the first apparatus, the first data a second quantity of times by using the second machine learning model, to obtain the second data, wherein the first quantity of times is greater than the second quantity of times, and a capability of the first apparatus does not support completion of the processing performed on the first data the first quantity of times; and
    the method further comprises:

    sending, by the first apparatus, the second data and second information to a third apparatus, wherein the second information indicates that a quantity of times that the second data is to be processed is a third quantity of times, the third quantity of times is a difference between the first quantity of times and the second quantity of times, and the third apparatus is configured to assist the first apparatus in processing data.

7.  The method according to claim 1 or 2, wherein the method further comprises:
    sending, by the first apparatus, assistance request information to the second apparatus, wherein the assistance request information is for requesting the second apparatus to assist in processing data.

8.  The method according to claim 1, 2 or 7, wherein the method further comprises:

    sending, by the first apparatus, third information to a central apparatus, wherein the third information indicates a quantity of processing times of data needed by the first apparatus; and
    receiving, by the first apparatus, feedback information from the central apparatus, wherein the feedback information indicates that the second apparatus is an assisting node.

9. The method according to claim 8, wherein the method further comprises:

   receiving, by the first apparatus, fourth information from the central apparatus, wherein the fourth information indicates a quantity of times that the first apparatus needs to process data received from the second apparatus; and
   the processing, by the first apparatus, the first data by using a second machine learning model, to obtain second data comprises:
   processing, by the first apparatus, the first data based on the fourth information by using the second machine learning model, to obtain the second data needed by the first apparatus.

10. The method according to claim 9, wherein the fourth information further indicates information about a third apparatus, and the third apparatus is an apparatus that is to receive processed data; and
    the method further comprises:
    sending, by the first apparatus, the second data to the third apparatus based on the fourth information.

11. The method according to claim 7 or 8, wherein the method further comprises:

    receiving, by the first apparatus, fifth information from the second apparatus, wherein the fifth information indicates a quantity of processed times corresponding to the first data; and
    processing, by the first apparatus by using the second machine learning model, the first data based on the quantity of processing times and the quantity of processing times of the data needed by the first apparatus, to obtain the second data needed by the first apparatus.

12. A data processing method, comprising:

    processing, by a first apparatus, raw data by using a first machine learning model, to obtain first data;
    sending, by the first apparatus, the first data to a second apparatus; and
    receiving, by the first apparatus, second data sent by the second apparatus or another apparatus, wherein the second data is obtained by processing the first data based on a second machine learning model, and a structure of the first machine learning model is the same as a structure of the second machine learning model.

13. The method according to claim 12, wherein the first machine learning model is a diffusion transformer, and the first machine learning model is used to perform noise reduction processing on the raw data.

14. The method according to claim 12 or 13, wherein the method further comprises:
    sending, by the first apparatus, first information to the second apparatus, wherein the first information is for requesting the second apparatus to process the first data, and/or the first information indicates a quantity of times that the first data is to be processed, and the quantity of times that the first data is to be processed is determined based on a quantity of times that the raw data needs to be processed and a quantity of times that the first apparatus processes the raw data.

15. A data processing method, comprising:

    receiving, by a central apparatus, first information from a first apparatus and second information from a second apparatus, wherein the first information indicates a first quantity of processing times of data needed by the first apparatus, the second information indicates a second quantity of processing times of data needed by the second apparatus, and a data processing model corresponding to the first quantity of processing times is the same as a data processing model corresponding to the second quantity of processing times; and
    sending, by the central apparatus, third information to the second apparatus, wherein the third information indicates the second apparatus to send processed data to the first apparatus, and the second quantity of processing times of the data needed by the second apparatus is less than or equal to the first quantity of processing times of the data needed by the first apparatus.

16. The method according to claim 15, wherein the method further comprises:
    sending, by the central apparatus, fourth information to the first apparatus, wherein the fourth information indicates a quantity of times that the first apparatus needs to process data received from the second apparatus.

17. A model training method, comprising:

obtaining, by a first apparatus, a training sample set, wherein the training sample set comprises first data and second data, the first data is obtained based on the second data, and the second data is a training label of the first data;

training, by the first apparatus, a first machine learning model based on the training sample set, to obtain a trained first machine learning model, wherein the first machine learning model is used to process the first data; and

sending, by the first apparatus, the trained first machine learning model to a second apparatus, wherein the second apparatus is an apparatus configured to aggregate machine learning models that are obtained by a plurality of apparatuses through training and that have a same structure and different parameters.

18. The method according to claim 17, wherein the method further comprises:

sending, by the first apparatus, first information to a third apparatus, wherein the first information indicates a capability that is related to model training and that is on the first apparatus, and the third apparatus is configured to determine, based on capabilities of the plurality of apparatuses participating in training the machine learning models, training content for which the plurality of apparatuses are responsible;

receiving, by the first apparatus, second information from the third apparatus, wherein the second information indicates a quantity of times that the first machine learning model trained on the first apparatus processes input data, and the second information further indicates a requirement on the input data of the first machine learning model;

processing, by the first apparatus, raw data based on the requirement on the input data and the quantity of times that the first machine learning model processes the input data that are indicated by the second information, to obtain the second data; and

processing, by the first apparatus, the second data based on the quantity of times that the first machine learning model processes the input data and that is indicated by the second information, to obtain the first data.

19. The method according to claim 17 or 18, wherein the method further comprises:

receiving, by the first apparatus, a second machine learning model from the second apparatus;

training, by the first apparatus, the second machine learning model based on the training sample set, to obtain a trained second machine learning model; and

sending, by the first apparatus, the trained second machine learning model to the second apparatus.

20. A model training method, comprising:

receiving, by a first apparatus, a plurality of pieces of capability information, wherein the plurality of pieces of capability information are from a plurality of different apparatuses, and each of the plurality of pieces of capability information indicates a capability that is related to model training and that is on an apparatus; and

separately sending, by the first apparatus, different training configuration information to the plurality of different apparatuses based on the plurality of pieces of capability information, wherein the training configuration information indicates quantities of times that machine learning models trained on the apparatuses process input data, the training configuration information further indicates requirements on the input data of the machine learning models trained on the apparatuses, and the machine learning models trained on the plurality of different apparatuses are models with a same structure.

21. A communication apparatus, wherein the communication apparatus is a first apparatus, and the communication apparatus comprises:

a transceiver module, configured to receive first data from a second apparatus, wherein the first data is data processed by using a first machine learning model; and

a processing module, configured to process the first data by using a second machine learning model, to obtain second data, wherein a structure of the first machine learning model is the same as a structure of the second machine learning model, and the first apparatus and the second apparatus are configured to jointly perform data processing.

22. The apparatus according to claim 21, wherein the second machine learning model is a diffusion transformer, and the second machine learning model is used to perform noise reduction processing on the first data.

23. The apparatus according to claim 21 or 22, wherein the transceiver module is further configured to receive first information from the second apparatus, wherein the first information is for requesting the first apparatus to process the first data.

24. The apparatus according to claim 23, wherein the first information indicates that a quantity of times that the first data is to be processed is a first quantity of times; and

the processing module is further configured to process the first data the first quantity of times by using the second machine learning model, to obtain the second data, wherein a capability of the first apparatus supports completion of the processing performed on the first data the first quantity of times.

25. The apparatus according to claim 24, further comprising:

a sending module, configured to send the second data to the second apparatus; or

the sending module, configured to send the second data to a source apparatus, wherein the first information further indicates information about the source apparatus, and the source apparatus is a $1^{st}$ apparatus for requesting assistance in data processing.

26. The apparatus according to claim 23, wherein the first information indicates that a quantity of times that the first data is to be processed is a first quantity of times;

the processing module is further configured to process the first data a second quantity of times by using the second machine learning model, to obtain the second data, wherein the first quantity of times is greater than the second quantity of times, and a capability of the first apparatus does not support completion of the processing performed on the first data the first quantity of times; and

the transceiver module is further configured to send the second data and second information to a third apparatus, wherein

the second information indicates that a quantity of times that the second data is to be processed is a third quantity of times, the third quantity of times is a difference between the first quantity of times and the second quantity of times, and the third apparatus is configured to assist the first apparatus in processing data.

27. The apparatus according to claim 21 or 22, wherein

the transceiver module is further configured to send assistance request information to the second apparatus, wherein the assistance request information is for requesting the second apparatus to assist in processing data.

28. The apparatus according to claim 21, 22, or 27, wherein the transceiver module is further configured to:

send third information to a central apparatus, wherein the third information indicates a quantity of processing times of data needed by the first apparatus; and

receive feedback information from the central apparatus, wherein the feedback information indicates that the second apparatus is an assisting node.

29. The apparatus according to claim 28, wherein

the transceiver module is further configured to receive fourth information from the central apparatus, wherein the fourth information indicates a quantity of times that the first apparatus needs to process data received from the second apparatus; and

the processing module is further configured to process the first data based on the fourth information by using the second machine learning model, to obtain the second data needed by the first apparatus.

30. The apparatus according to claim 29, wherein the fourth information further indicates information about a third apparatus, and the third apparatus is an apparatus that is to receive processed data; and

the transceiver module is further configured to send the second data to the third apparatus based on the fourth information.

31. The apparatus according to claim 27 or 28, wherein

the transceiver module is further configured to receive fifth information from the second apparatus, wherein the fifth information indicates a quantity of processed times corresponding to the first data; and

the processing module is further configured to process, by using the second machine learning model, the first data based on the quantity of processing times and the quantity of processing times of the data needed by the first apparatus, to obtain the second data needed by the first apparatus.

32. The apparatus according to any one of claims 21 to 31, wherein the transceiver module is a transceiver, and the processing module is a processor.

33. A communication apparatus, wherein the communication apparatus is a first apparatus and comprises:

a processing module, configured to process raw data by using a first machine learning model, to obtain first data; and
a transceiver module, configured to send the first data and first information to a second apparatus, wherein the transceiver module is further configured to receive second data sent by the second apparatus or another apparatus, wherein the second data is obtained by processing the first data based on a second machine learning model, and a structure of the first machine learning model is the same as a structure of the second machine learning model.

34. The apparatus according to claim 33, wherein the first machine learning model is a diffusion transformer, and the first machine learning model is used to perform noise reduction processing on the raw data.

35. The apparatus according to claim 33 or 34, wherein
the transceiver module is further configured to send the first information to the second apparatus, wherein the first information is for requesting the second apparatus to process the first data, and/or the first information indicates a quantity of times that the first data is to be processed, and the quantity of times that the first data is to be processed is determined based on a quantity of times that the raw data needs to be processed and a quantity of times that the first apparatus processes the raw data.

36. The apparatus according to any one of claims 33 to 35, wherein the transceiver module is a transceiver, and the processing module is a processor.

37. A communication apparatus, comprising:

a transceiver module, configured to receive first information from a first apparatus and second information from a second apparatus, wherein the first information indicates a first quantity of processing times of data needed by the first apparatus, the second information indicates a second quantity of processing times of data needed by the second apparatus, and a data processing model corresponding to the first quantity of processing times is the same as a data processing model corresponding to the second quantity of processing times, wherein
the transceiver module is further configured to send third information to the second apparatus, wherein the third information indicates the second apparatus to send processed data to the first apparatus, and the second quantity of processing times of the data needed by the second apparatus is less than or equal to the first quantity of processing times of the data needed by the first apparatus.

38. The apparatus according to claim 37, wherein the transceiver module is further configured to send fourth information to the first apparatus, wherein the fourth information indicates a quantity of times that the first apparatus needs to process data received from the second apparatus.

39. The apparatus according to claim 37 or 38, wherein the transceiver module is a transceiver.

40. A model training apparatus, comprising:

a transceiver module, configured to obtain a training sample set, wherein the training sample set comprises first data and second data, the first data is obtained based on the second data, and the second data is a training label of the first data; and
a processing module, configured to train a first machine learning model based on the training sample set, to obtain a trained first machine learning model, wherein the first machine learning model is used to process the first data, wherein
the transceiver module is further configured to send the trained first machine learning model to a second apparatus, wherein the second apparatus is an apparatus configured to aggregate machine learning models that are obtained by a plurality of apparatuses through training and that have a same structure and different parameters.

41. The apparatus according to claim 40, wherein

the transceiver module is further configured to send first information to a third apparatus, wherein the first information indicates a capability that is related to model training and that is on the first apparatus, and the third apparatus is configured to determine, based on capabilities of the plurality of apparatuses participating in training the machine learning models, training content for which the plurality of apparatuses are responsible;
the transceiver module is further configured to receive second information from the third apparatus, wherein the second information indicates a quantity of times that the first machine learning model trained on the first apparatus processes input data, and the second information further indicates a requirement on the input data of the first machine learning model;
the processing module is further configured to process raw data based on the requirement on the input data and the quantity of times that the first machine learning model processes the input data that are indicated by the second information, to obtain the second data; and
the processing module is further configured to process the second data based on the quantity of times that the first machine learning model processes the input data and that is indicated by the second information, to obtain the first data.

42. The apparatus according to claim 40 or 41, wherein

the transceiver module is further configured to receive a second machine learning model from the second apparatus;
the processing module is further configured to train the second machine learning model based on the training sample set, to obtain a trained second machine learning model; and
the transceiver module is further configured to send the trained second machine learning model to the second apparatus.

43. The apparatus according to any one of claims 40 to 42, wherein the transceiver module is a transceiver, and the processing module is a processor.

44. A model training apparatus, comprising:

a transceiver module, configured to receive a plurality of pieces of capability information, wherein the plurality of pieces of capability information are from a plurality of different apparatuses, and each of the plurality of pieces of capability information indicates a capability that is related to model training and that is on an apparatus, wherein the transceiver module is further configured to separately send different training configuration information to the plurality of different apparatuses based on the plurality of pieces of capability information, wherein the training configuration information indicates quantities of times that machine learning models trained on the apparatuses process input data, the training configuration information further indicates requirements on the input data of the machine learning models trained on the apparatuses, and the machine learning models trained on the plurality of different apparatuses are models with a same structure.

45. The apparatus according to claim 44, wherein the transceiver module is a transceiver.

46. A communication apparatus, comprising at least one processor, wherein the at least one processor is coupled to a memory;

the memory is configured to store a program or instructions; and
the at least one processor is configured to execute the program or the instructions, to enable the apparatus to implement the method according to any one of claims 1 to 11, to implement the method according to any one of claims 12 to 14, to implement the method according to claim 15 or 16, to implement the method according to any one of claims 17 to 19, or to implement the method according to claim 20.

47. A communication apparatus, comprising at least one processor, wherein
the at least one processor is configured to execute a program or instructions, to enable the apparatus to implement the method according to any one of claims 1 to 11, to implement the method according to any one of claims 12 to 14, to implement the method according to claim 15 or 16, to implement the method according to any one of claims 17 to 19, or to implement the method according to claim 20.

48. A communication system, comprising the communication apparatus according to any one of claims 21 to 32 and the communication apparatus according to any one of claims 33 to 36.

49. The system according to claim 48, wherein the system further comprises the communication apparatus according to any one of claims 37 to 39.

50. A communication system, comprising the model training apparatus according to any one of claims 40 to 43 and the model training apparatus according to claim 44 or 45.

51. A computer-readable storage medium, wherein the readable storage medium stores instructions, and when the instructions are executed by a computer, the method according to any one of claims 1 to 11 is performed, the method according to any one of claims 12 to 14 is performed, the method according to claim 15 or 16 is performed, the method according to any one of claims 17 to 19 is performed, or the method according to claim 20 is performed.

52. A computer program product, wherein the program product comprises instructions, and when the instructions are run on a computer, the method according to any one of claims 1 to 11 is performed, the method according to any one of claims 12 to 14 is performed, the method according to claim 15 or 16 is performed, the method according to any one of claims 17 to 19 is performed, or the method according to claim 20 is performed.

FIG. 1

FIG. 2

FIG. 3

FIG. 4

Network device 501

Terminal device 502

FIG. 5

FIG. 6

700

| Central apparatus | Aggregation apparatus | Distributed apparatus 1 | Distributed apparatus 2 | ··· | Distributed apparatus N |
|---|---|---|---|---|---|

701: Capability information

701: Capability information

701: Capability information

702: Training configuration information

702: Training configuration information

702: Training configuration information

703: Machine learning model and data sample

703: Machine learning model and data sample

703: Machine learning model and data sample

| 704: Generate a training sample set | 704: Generate a training sample set | 704: Generate a training sample set |
|---|---|---|
| 705: Train a machine learning model | 705: Train a machine learning model | 705: Train a machine learning model |

706: Trained machine learning model

706: Trained machine learning model

706: Trained machine learning model

707: Aggregate the plurality of trained machine learning models, to obtain an aggregation model

708: Aggregation model

708: Aggregation model

708: Aggregation model

FIG. 7

FIG. 8

<u>900</u>

FIG. 9A

900

| Distributed apparatus 1 | | Distributed apparatus 2 |
|---|---|---|

906: Determine a data processing requirement

907: Assistance request information →

908: Process raw data by using a machine learning model, to obtain first data

← **909: First data**

910: Process the first data by using a machine learning model, to obtain second data

**FIG. 9B**

1000

| Distributed apparatus 1 | Distributed apparatus 2 | Distributed apparatus 3 | ... | Distributed apparatus N |
|---|---|---|---|---|

1001: Determine a data processing requirement

1002: Process raw data by using a machine learning model, to obtain first data

— 1003: First data →

1004: Process the first data by using a machine learning model, to obtain second data

— 1005: Second data →

1006: Sequentially assist in processing data, to obtain target data needed by the distributed apparatus 1

← **1007: Target data** —

**FIG. 10A**

1000

```
┌──────────────┐      ┌──────────────┐      ┌──────────────┐   ...   ┌──────────────┐
│ Distributed  │      │ Distributed  │      │ Distributed  │         │ Distributed  │
│ apparatus 1  │      │ apparatus 2  │      │ apparatus 3  │         │ apparatus N  │
└──────────────┘      └──────────────┘      └──────────────┘         └──────────────┘
```

1008: Determine a data
processing requirement

1009: Assistance
request information

1010: Process raw data by using
a machine learning model, to
obtain intermediate data

1011:
Intermediate data

1012: Sequentially assist in
processing data, to obtain first data
needed by the distributed apparatus 1

**1013: First data needed by the
distributed apparatus 1**

1014: Process the first data
by using a machine learning
model, to obtain second data

FIG. 10B

48

1100

| Central apparatus | Distributed apparatus 1 | Distributed apparatus 2 | Distributed apparatus 3 |

1101: Data processing requirement

1101: Data processing requirement

1101: Data processing requirement

1002: Determine a data processing sequence of the distributed apparatuses

1103: Indication information

1103: Indication information

1103: Indication information

1104: Process raw data T1 times by using a machine learning model, to obtain first data

1105: Send the first data

1106: Process the first data T2 times by using a machine learning model, to obtain second data

1107: Send the second data

1108: Process the second data T2 times by using a machine learning model, to obtain third data

FIG. 11

1200

```
Central          Distributed          Distributed
apparatus        apparatus 1          apparatus 2
```

1201: Data processing
requirement and data
processing capability

1201: Data processing requirement
and data processing capability

1202: Determine a data processing
sequence of the distributed
apparatuses and quantities of data
processing times

1203: Indication
information

1203: Indication information

1204: Process to-be-processed data
N1 times by using a machine
learning model, to obtain first data

1205: Send
the first data

1206: Process the first data N2
times by using a machine learning
model, to obtain second data

1207: Second data

FIG. 12

1300

Communication apparatus

1301                        1302

Transceiver                Processing
module                     module

FIG. 13

FIG. 14

FIG. 15

FIG. 16

FIG. 17

## INTERNATIONAL SEARCH REPORT

| International application No. |
| --- |
| **PCT/CN2022/115466** |

| A. | CLASSIFICATION OF SUBJECT MATTER |
| --- | --- |

G06F 21/62(2013.01)i; G06F 21/60(2013.01)i; G06N 20/00(2019.01)i

According to International Patent Classification (IPC) or to both national classification and IPC

| B. | FIELDS SEARCHED |
| --- | --- |

Minimum documentation searched (classification system followed by classification symbols)

G06F; G06N; G06T

Documentation searched other than minimum documentation to the extent that such documents are included in the fields searched

Electronic data base consulted during the international search (name of data base and, where practicable, search terms used)

WPI, EPODOC, CNKI, CNPAT: 数据, 处理, 模型, 相同, 结构, 联合, 执行, 次数, 装置, 第一, 第二, 训练, 样本, data, process, model, same, structure, union, carry out, time, apparatus, first, second, training, sample

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| X | CN 111276120 A (HUAWEI TECHNOLOGIES CO., LTD.) 12 June 2020 (2020-06-12) description, paragraphs [0087]-[0249], and figures 1-11 | 1-3, 7, 12-13, 17, 19, 21-23, 27, 32-34, 36, 40, 42-43, 46-52 |
| A | CN 113436208 A (INDUSTRIAL AND COMMERCIAL BANK OF CHINA CO., LTD.) 24 September 2021 (2021-09-24) entire document | 1-52 |
| A | CN 109711556 A (CHINA SOUTHERN POWER GRID CO., LTD. et al.) 03 May 2019 (2019-05-03) entire document | 1-52 |
| A | CN 113657613 A (BEIJING YIZHEN XUESI EDUCATION TECHNOLOGY CO., LTD.) 16 November 2021 (2021-11-16) entire document | 1-52 |
| A | CN 111598139 A (BEIJING QIYI CENTURY SCIENCE & TECHNOLOGY CO., LTD.) 28 August 2020 (2020-08-28) entire document | 1-52 |

| ✓ Further documents are listed in the continuation of Box C. | ✓ See patent family annex. |
| --- | --- |

| * | Special categories of cited documents: |
| --- | --- |
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **03 December 2022** | **19 December 2022** |

| Name and mailing address of the ISA/CN | Authorized officer |
| --- | --- |
| **China National Intellectual Property Administration (ISA/ CN)** **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

## INTERNATIONAL SEARCH REPORT

| | International application No. |
| --- | --- |
| | **PCT/CN2022/115466** |

**C.    DOCUMENTS CONSIDERED TO BE RELEVANT**

| Category* | Citation of document, with indication, where appropriate, of the relevant passages | Relevant to claim No. |
| --- | --- | --- |
| A | WO 2021232832 A1 (HUAWEI TECHNOLOGIES CO., LTD.) 25 November 2021 (2021-11-25)<br>entire document | 1-52 |

Form PCT/ISA/210 (second sheet) (January 2015)

**INTERNATIONAL SEARCH REPORT**
Information on patent family members

International application No.

**PCT/CN2022/115466**

| Patent document cited in search report | | | Publication date (day/month/year) | Patent family member(s) | | | Publication date (day/month/year) |
|---|---|---|---|---|---|---|---|
| CN | 111276120 | A | 12 June 2020 | None | | | |
| CN | 113436208 | A | 24 September 2021 | None | | | |
| CN | 109711556 | A | 03 May 2019 | None | | | |
| CN | 113657613 | A | 16 November 2021 | None | | | |
| CN | 111598139 | A | 28 August 2020 | None | | | |
| WO | 2021232832 | A1 | 25 November 2021 | CN | 113688855 | A | 23 November 2021 |